# EUROPEAN PATENT APPLICATION

(11) **EP 4 708 942 A1**
(43) Date of publication of application: **11.03.2026**
(21) Application number: 24813814.1
(22) Date of filing: 14.03.2024
(51) Int. Cl.: H04W 12/03, H04W 76/19, H04W 28/04, H04L 9/40

(54) **COMMUNICATION METHOD, COMMUNICATION APPARATUS, AND ELECTRONIC DEVICE**

(30) Priority: 26.05.2023 CN 202310614032
(71) Applicant: Honor Device Co., Ltd., Shenzhen, Guangdong 518040 (CN)
(72) Inventor: LI, Haibo, Shenzhen, Guangdong 518040 (CN)
(74) Representative: Epping - Hermann - Fischer
(86) International application number: PCT/CN2024/081712
(87) International publication number: WO 2024/244608

(57) **Abstract**

Embodiments of this application provide a communication method, a communication apparatus, and an electronic device, and relate to the field of communication technologies. An ignorable verification processing failure item can be automatically skipped, to complete an RRC reconfiguration procedure. In this way, it is avoided that a call is interrupted due to the ignorable verification processing failure item and entering of an RRC connection reestablishment procedure. The method may include: receiving, by the electronic device, a first radio resource control RRC reconfiguration message, where the first RRC reconfiguration message includes a first parameter and a value of the first parameter; and the electronic device stores a first configuration item before receiving the first RRC reconfiguration message, and the first configuration item includes a second parameter and a value of the second parameter; performing, by the electronic device, verification processing on the first RRC reconfiguration message and the first configuration item, where the verification processing includes a first verification; and sending, by the electronic device, a first RRC reconfiguration complete message when a verification failure result of the first verification is ignorable, or a process of the first verification is ignorable.

## Description

This application claims priority to Chinese Patent Application No. 202310614032.X, filed with the China National Intellectual Property Administration on May 26, 2023 and entitled "COMMUNICATION METHOD, COMMUNICATION APPARATUS, AND ELECTRONIC DEVICE", which is incorporated herein by reference in its entirety.

### TECHNICAL FIELD

Embodiments of this application relate to the field of communication technologies, and in particular, to a communication method, a communication apparatus, and an electronic device.

### BACKGROUND

Currently, after a base station and a user equipment (UE) fail to perform an RRC reconfiguration procedure, the UE and the base station enter an RRC connection reestablishment procedure.

A plurality of reasons may cause a failure of the RRC reconfiguration procedure. For example, the UE may perform verification processing based on a plurality of parameters that are configured by the base station through an RRC reconfiguration message. When the verification processing fails, the RRC reconfiguration procedure fails. In this case, call interruption occurs after the RRC connection reestablishment procedure is entered.

### SUMMARY

This application provides a communication method, a communication apparatus, and an electronic device, which can reduce occurrence of call interruption.

To achieve the foregoing technical objective, this application uses the following technical solutions.

According to a first aspect, a communication method is provided. The method is applied to an electronic device. The electronic device is in a call. The method includes: receiving, by the electronic device, a first radio resource control RRC reconfiguration message, where the first RRC reconfiguration message includes a first parameter and a first value corresponding to the first parameter; and the electronic device stores a first configuration item before receiving the first RRC reconfiguration message, the first configuration item includes a second parameter and a second value corresponding to the second parameter, and the first parameter and the second parameter are related to a same attribute corresponding to a same object; performing, by the electronic device, verification processing on the first RRC reconfiguration message and the first configuration item, where the verification processing includes a first verification, and the first verification includes verifying the first parameter, the first value corresponding to the first parameter, the second parameter, and the second value corresponding to the second parameter; and sending, by the electronic device, a first RRC reconfiguration complete message when a verification failure result of the first verification is ignorable, or a process of the first verification is ignorable.

In this way, the electronic device can automatically detect whether a current verification failure is ignorable. Therefore, when the first verification fails, and the verification process or the verification result of the first verification is ignorable, the electronic device does not trigger a radio link failure (RLF) because the first verification fails, that is, corresponding call freezing does not occur. In addition, because the result that the first verification fails is ignored, the electronic device does not exit a current RRC reconfiguration procedure and enter an RRC connection reestablishment procedure because the first verification fails. In this way, a resulting problem of communication interruption can be avoided.

Optionally, that the first parameter and the second parameter are related to a same attribute corresponding to a same object includes that both the first parameter and the second parameter are related to an encrypted attribute corresponding to a first DRB. In this way, it is clear that in the example, the first parameter and the second parameter used for performing the first verification may be related configurations for an encrypted attribute of a same DRB.

Optionally, that the electronic device stores a first configuration item includes: receiving, by the electronic device, a second RRC reconfiguration message before receiving the first RRC reconfiguration message, where the second RRC reconfiguration message includes the second parameter and the second value corresponding to the second parameter, the second parameter is an encrypted identifier corresponding to the first DRB, and the second value corresponding to the encrypted identifier of the first DRB represents that data transmitted through the first DRB does not need to be encrypted. The first parameter is an encryption algorithm, the first value corresponding to the first parameter is content corresponding to the encryption algorithm, and the content corresponding to the encryption algorithm represents that the data transmitted through the first DRB needs to be encrypted based on the content corresponding to the encryption algorithm. The first RRC reconfiguration message does not include the encrypted identifier corresponding to the first DRB and the value corresponding to the encrypted identifier of the first DRB. In this example, the first parameter may correspond to the encryption algorithm, and the first value carried in the first parameter may be the content of the encryption algorithm. Therefore, if the first parameter is configured, the electronic device is instructed to perform encryption based on the first value on all the DRBs and SRBs including the first DRB. In addition, the second parameter may correspond to the encrypted identifier, and the encrypted identifier may be used to configure an encrypted attribute of a single DRB. For example, when a value of the second parameter is set to the second value, it represents that the corresponding first DRB does not need to be encrypted. In this way, in the verification processing process of the first verification, whether encrypted attribute configurations of the same DRB (for example, the first DRB) are consistent may be verified for the first parameter and the second parameter.

Optionally, the second RRC reconfiguration message includes the second parameter and the second value corresponding to the second parameter, the second parameter is the encrypted identifier corresponding to the first DRB, and that the second value corresponding to the encrypted identifier of the first DRB represents that data transmitted through the first DRB does not need to be encrypted includes that: The second RRC reconfiguration message includes a first cipheringDisabled field, and the first cipheringDisabled field corresponds to the first DRB. The first cipheringDisabled field indicates the encrypted identifier of the first DRB. A value of the first cipheringDisabled field is set to true, representing that the data transmitted through the first DRB does not need to be encrypted. That the first RRC reconfiguration message includes a first parameter and a first value corresponding to the first parameter, the first parameter is an encryption algorithm, the first value corresponding to the first parameter is content corresponding to the encryption algorithm, and the content corresponding to the encryption algorithm represents that the data transmitted through the first DRB needs to be encrypted based on the content corresponding to the encryption algorithm includes that: The first RRC reconfiguration message includes an encryption configuration securityConfig field, where the securityConfig field indicates the encryption algorithm, and the securityConfig field represents that the first DRB needs to be encrypted based on the encryption algorithm. The example further provides a specific implementation of the encryption algorithm and the encrypted identifier.

Optionally, the first verification fails when the first cipheringDisabled field is set to true, the first RRC reconfiguration message carries the securityConfig field and content corresponding to the securityConfig field, and the first RRC reconfiguration message does not include the first cipheringDisabled field and the value corresponding to the first cipheringDisabled field. It may be understood that a protocol specifies that once the cipheringDisabled field is configured, the cipheringDisabled field cannot be changed when a corresponding DRB is not released. In this way, after that the first cipheringDisabled field is set to true is configured in the second RRC reconfiguration message, the securityConfig field and the content corresponding to the securityConfig field are configured in the second RRC reconfiguration message, and that the first cipheringDisabled field is true is not included in the second RRC reconfiguration message, resulting in a corresponding failure of the first verification.

Optionally, before the sending, by the electronic device, a first RRC reconfiguration complete message, the method further includes: determining, by the electronic device, that the verification failure result of the first verification is ignorable, or the process of the first verification is ignorable. The sending, by the electronic device, a first RRC reconfiguration complete message includes: ignoring, by the electronic device, the verification failure result of the first verification or skipping the first verification, and sending the first RRC reconfiguration complete message. In this way, before performing the first verification, the electronic device may determine that the process or the result of the first verification is ignorable. In other words, whether the first verification is performed, or what the result of the first verification is, may be considered that the verification succeeds. Therefore, the electronic device may not perform the first verification, thereby saving corresponding overheads.

Optionally, the electronic device stores configuration information, the configuration information includes first indication information, and the first indication information indicates whether the failure result or the process of the first verification is ignorable. The determining, by the electronic device, that the verification failure result of the first verification is ignorable, or the process of the first verification is ignorable includes: determining, by the electronic device based on the first indication information, that the verification failure result of the first verification is ignorable, or the process of the first verification is ignorable. In this way, by storing the configuration information in the electronic device, the electronic device is enabled to accurately determine whether the process or the result of the first verification is ignorable.

Optionally, when the electronic device receives the first RRC reconfiguration message, the electronic device camps on a first cell, and the first cell corresponds to a first base station. Before the sending, by the electronic device, a first RRC reconfiguration complete message, the method further includes: camping, by the electronic device, on the first cell. The sending, by the electronic device, a first RRC reconfiguration complete message includes: sending, by the electronic device, the first RRC reconfiguration complete message to the first base station. Therefore, the electronic device may continue to camp on the first cell through the current RRC reconfiguration procedure, and indicate to the first base station that the RRC reconfiguration procedure succeeds.

Optionally, when the electronic device receives the first RRC reconfiguration message, the electronic device camps on a first cell, and the first cell corresponds to a first base station. The first RRC reconfiguration message includes cell information of a second cell, and the first RRC reconfiguration message is used for instructing the electronic device to be handed over to and camp on the second cell. Before the sending, by the electronic device, a first RRC reconfiguration complete message, the method further includes: camping, by the electronic device, on the second cell based on the cell information of the second cell, where the second cell corresponds to a second base station. The second cell is different from the first cell. The sending, by the electronic device, a first RRC reconfiguration complete message includes: sending, by the electronic device, the first RRC reconfiguration complete message to the second base station. Therefore, the electronic device may be handed over to and camp on the second cell through the current RRC reconfiguration procedure, and indicate to the second base station that the RRC reconfiguration procedure succeeds.

Optionally, the second RRC reconfiguration message is received before the electronic device is in the call. For example, the second RRC reconfiguration message may be received in a call establishment process. In this way, the first DRB may correspond to a DRB of an IMB of a current call. For example, the second RRC reconfiguration message may be received before the call establishment process. In this way, the first DRB may correspond to a default bearer DRB.

Optionally, before the sending, by the electronic device, a first RRC reconfiguration complete message, the method further includes: determining, by the electronic device based on at least one preset ignoring configuration, that the verification failure result of the first verification is ignorable. The at least one ignoring configuration includes a first ignoring identifier, and the first ignoring identifier is set to a third value, representing that the process of the first verification is ignorable. Alternatively, the first ignoring identifier is set to a fourth value, representing that the process of the first verification is ignorable. Therefore, a specific solution implementation of determining that the process or the failure result of the first verification is ignorable is provided.

Optionally, a skip switch is configured in the electronic device. The skip switch is used to enable the verification failure result of the first verification to be ignored, or the skip switch is used to enable the process of the first verification to be ignored. Before the sending, by the electronic device, a first RRC reconfiguration complete message, the method further includes: determining, by the electronic device, that the skip switch is turned on. In this way, when there are a plurality of ignorable verifications, overall control on all ignorable items may be performed through the skip switch. In other words, each ignorable item is an ignorable verification.

Optionally, before the electronic device receives the first RRC reconfiguration message, the method further includes: receiving, by the electronic device, a first measurement event. The electronic device performs measurement corresponding to the first measurement event, and the electronic device sends a first measurement report.

Optionally, the first measurement event is any one of the following: an event A2, an event A3, an event B1, and an event B2.

In this way, a scenario implementation in which the base station configures the first RRC reconfiguration message for the electronic device is provided. For example, if the electronic device moves in the call, signal quality is reduced, and mobility measurement is triggered. For example, A3 measurement is performed, and an A3 measurement report is reported to the base station. In this way, the base station may deliver the first RRC reconfiguration message to the electronic device, thereby instructing the electronic device to perform cell handover.

According to a second aspect, a communication apparatus is provided. The apparatus is applied to an electronic device, and the apparatus is configured to communicate with a base station according to the communication method provided in the first aspect and any possible design thereof.

According to a third aspect, an electronic device is provided. The electronic device includes a processor and a memory, the memory stores one or more computer programs, and the one or more computer programs, when executed by the processor, cause the electronic device to perform the communication method provided in the first aspect or any possible design thereof, to communicate with a base station.

Optionally, the processor includes a modem modem.

According to a fourth aspect, a chip system is provided. The chip system is applied to an electronic device. The chip system includes one or more interface circuits and one or more processors. The interface circuit and the processor are interconnected through a line. The interface circuit is configured to: receive a signal from a memory of the electronic device and send the signal to the processor, where the signal includes computer instructions stored in the memory. When the processor executes the computer instructions, the electronic device performs the communication method provided in the first aspect and any possible design thereof.

Optionally, the chip system includes a modem modem in the electronic device.

According to a fifth aspect, a computer-readable storage medium is further provided in this application, including computer instructions. When the computer instructions are run on an electronic device, the electronic device is enabled to perform the technical solution provided in the first aspect and any possible implementation thereof.

According to a sixth aspect, a computer program product is further provided in this application. When the computer program product is run on a computer, the computer is enabled to perform the technical solution provided in the first aspect and any possible implementation thereof.

It may be understood that the solutions provided in the second aspect to the sixth aspect of this application may respectively correspond to the first aspect and any possible design thereof. Therefore, beneficial effects that can be achieved are similar, and are not described herein again.

### BRIEF DESCRIPTION OF DRAWINGS

FIG. 1 is a schematic diagram of interaction of a successful RRC reconfiguration;
FIG. 2 is a schematic diagram of performing encryption configuration by using an RRC reconfiguration message;
FIG. 3 is a schematic diagram of interaction of a failed RRC reconfiguration;
FIG. 4A is a schematic diagram of interaction in a scenario in which a UE performs cell handover;
FIG. 4B is a schematic diagram of configuring an encrypted identifier by an RRC reconfiguration message 41;
FIG. 4C is a schematic diagram of configuring an encryption algorithm by an RRC reconfiguration message 42;
FIG. 5A is a schematic diagram of interaction of a communication method according to an embodiment of this application;
FIG. 5B is a schematic diagram of interaction of a communication method according to an embodiment of this application;
FIG. 6 is a schematic diagram of interaction of a communication method according to an embodiment of this application;
FIG. 7 is a schematic diagram of interaction of a communication method according to an embodiment of this application;
FIG. 8 is a schematic diagram of interaction of a communication method according to an embodiment of this application;
FIG. 9 is a schematic diagram of composition of a communication apparatus according to an embodiment of this application;
FIG. 10 is a schematic diagram of composition of an electronic device according to an embodiment of this application;
FIG. 11 is a schematic diagram of composition of another electronic device according to an embodiment of this application;
FIG. 12 is a schematic diagram of composition of a chip module in an electronic device according to an embodiment of this application; and
FIG. 13 is a schematic diagram of composition of a chip system according to an embodiment of this application.

### DESCRIPTION OF EMBODIMENTS

The technical solutions in embodiments of this application are clearly and completely described in the following with reference to the accompanying drawings in the embodiments of this application. It is clear that, the described embodiments are merely some rather than all of the embodiments of the present invention. All other embodiments obtained by a person of ordinary skill in the art based on the embodiments of the present invention without creative efforts shall fall within the protection scope of the present invention.

The technical solutions provided in the embodiments of this application may be applied to various wireless communication networks, such as: a global system for mobile communication (global system for mobile communication, GSM for short), a code division multiple access (code division multiple access, CDMA for short) system, a wideband code division multiple access (wideband code division multiple access, WCDMA for short) system, a universal mobile telecommunications system (universal mobile telecommunication system, UMTS for short), a general packet radio service (general packet radio service, GPRS for short) system, a long term evolution (long term evolution, LTE for short) system, a long term evolution advanced (long term evolution advanced, LTE-A for short) system, a worldwide interoperability for microwave access (worldwide interoperability for microwave access, WiMAX for short) system, a 5th generation mobile communication technology (5th Generation Mobile Communication Technology, 5G) new radio (New Radio) network, and a 6th generation mobile communication technology (6th generation mobile networks, 6G) network. Terms "network" and "system" may be used interchangeably.

In this embodiment of this application, a base station (base station, BS for short) may be a device that communicates with a user equipment (user equipment, UE for short) or another communication station like a relay station. The base station may provide communication coverage of a particular physical area. For example, the base station may be specifically a base transceiver station (Base Transceiver Station, BTS for short) or a base station controller (Base Station Controller, BSC for short) in GSM or CDMA, or may be a NodeB (Node B, NB for short) in UMTS or a radio network controller (Radio Network Controller, RNC for short) in UMTS, or may be an evolved base station (Evolutional Node B, eNB or eNodeB for short) in LTE, or may be a next generation base station (next generation Node B, gNB for short) in 5G NR, or may be another access network device providing an access service in the wireless communication network. This is not limited in the present invention.

The UE may transmit signaling and/or data by using a radio bearer between the UE and the base station.

The radio bearer may include a signaling radio bearer (signaling radio bearer, SRB for short) and/or a data radio bearer (data radio bearer, DRB for short).

The SRB may be of a plurality of different types. For example, the type of the SRB may include an SRB0, an SRB1, and/or an SRB2.

The SRB0 is used by the base station to send a radio resource control (radio resource control, RRC) connection reconfiguration message to the UE. Alternatively, the UE sends an RRC connection reconfiguration request message to the base station, to reconfigure the SRB1 or the SRB2 between the base station and the UE. The SRB1 and the SRB2 are used for transmitting an RRC message between the base station and the UE. The RRC connection reconfiguration message may also be referred to as an RRC reconfiguration message for short, and the RRC connection reconfiguration request message may also be referred to as an RRC reconfiguration request message for short.

The DRB may include a DRB used for transmitting the RRC message and a DRB used for transmitting user data.

It may be understood that in a process in which the UE communicates with the base station, the UE needs to maintain a stable RRC connection with the base station. In a scenario like cell handover, quality of an original RRC connection is reduced, and the UE may perform an RRC connection reconfiguration procedure with the base station, thereby improving the quality of the RRC connection.

In the foregoing example, exchange of the RRC connection reconfiguration message or the RRC connection reconfiguration request message performed on the SRB0 may be performed in the RRC connection reconfiguration procedure.

In this application, the RRC connection reconfiguration procedure is used for modifying the RRC connection between the UE and the base station. For example, a resource element (Resource Element, RB) is established/modified/released, cell handover is performed, and measurement is prepared/modified/released.

The 5G NR network is used as an example. The RRC reconfiguration procedure may be initiated by the base station (for example, the gNB) on a network side.

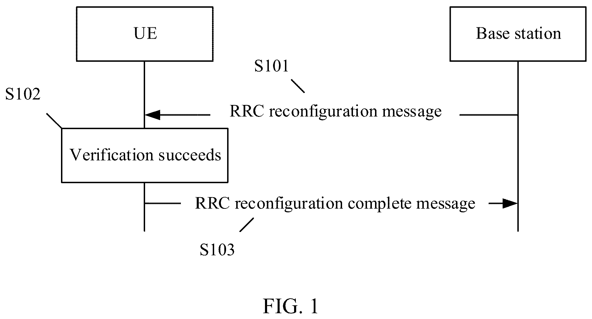

Refer to FIG. 1. FIG. 1 is a schematic diagram of interaction of an RRC reconfiguration procedure. FIG. 1 shows a specific example of a successful RRC reconfiguration.

As shown in FIG. 1, the RRC reconfiguration procedure may include the following steps.

S101. A base station sends an RRC reconfiguration message to a UE. For example, the RRC reconfiguration message may include RRCReconfiguration.

In this example, the RRC reconfiguration message may carry a plurality of pieces of field information corresponding to an RRC resource reconfigured for the UE.

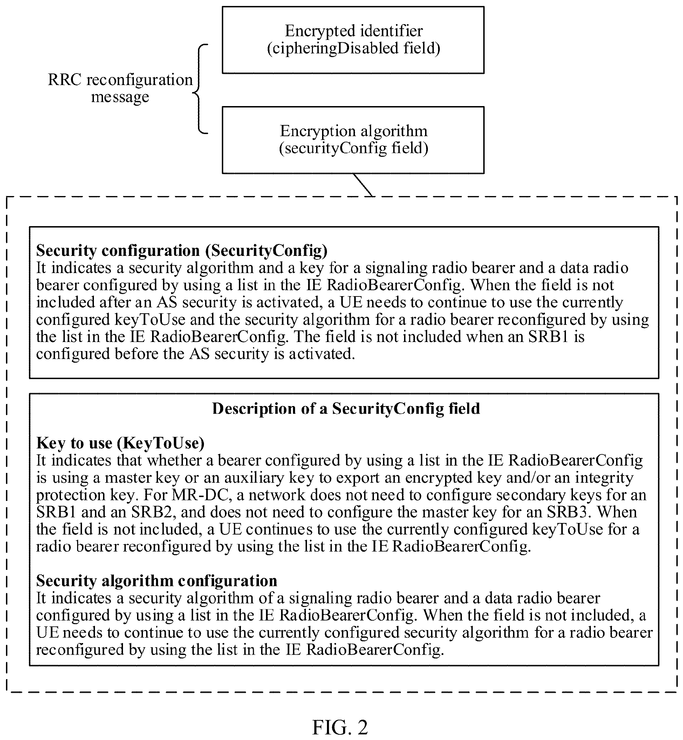

Refer to FIG. 2. A plurality of fields corresponding to the RRC resource may include a field corresponding to an encrypted identifier, and/or a field corresponding to an encryption algorithm.

In some embodiments, a field indicated by the RRC reconfiguration message may include a field that is corresponding to an encrypted identifier corresponding to a DRB.

An example in which the encrypted identifier is a cipheringDisabled field is used. The cipheringDisabled field may be valid for a configured DRB. If the cipheringDisabled field is set to true, it corresponds to that the DRB does not need to be encrypted. Correspondingly, if a network is not configured with the cipheringDisabled field, it corresponds to that the DRB needs to be encrypted. In this embodiment of this application, that the DRB does not need to be encrypted means that data transmitted through the DRB does not need to be encrypted. Correspondingly, that the DRB needs to be encrypted means that the data transmitted through the DRB needs to be encrypted.

It should be noted that, in some other embodiments, the field of the encrypted identifier that configures the DRB may alternatively be another field. This is not limited in this embodiment of this application.

In some other embodiments, the plurality of fields indicated by the RRC reconfiguration message may further include an encryption algorithm (or referred to as a security configuration).

An example in which the encryption algorithm is identified by using an encryption configuration (securityConfig) field is used. FIG. 2 provides related descriptions of a securityConfig field in an existing protocol. As shown in FIG. 2, securityConfig indicates a security algorithm and a key for a signaling radio bearer and a data radio bearer configured by using a list in this IERadioBearerConfig. When the field is not included after an AS security is activated, the UE continues to use currently configured keyToUse and the security algorithm for a radio bearer reconfigured by using the list in the IE RadioBearerConfig. The field is not included when an SRB1 is configured before the AS security is activated. In descriptions of a key to use (KeyToUse), securityConfig indicates whether a bearer configured by using the list in the IE RadioBearerConfig is using a master key or an auxiliary key to export an encrypted key and/or an integrity protection key. For MR-DC, the network does not need to configure secondary keys for the SRB 1 and an SRB2, and does not need to configure the master key for an SRB3. When the field is not included, the UE continues to use the currently configured keyToUse for the radio bearer reconfigured by using the list in the IE RadioBearerConfig. securityConfig further indicates the security algorithm for the signaling radio bearer and the data radio bearer configured by using the list in the IE RadioBearerConfig. When the field is not included, the UE continues to use the currently configured security algorithm for the radio bearer reconfigured by using the list in the IE RadioBearerConfig.

Therefore, in this embodiment of this application, the securityConfig field may be valid for all radio bearers (that is, all the currently configured DRBs and SRBs) configured in current communication. In other words, after the base station configures the securityConfig field for the UE, it correspondingly indicates that all the DRBs and SRBs in the current communication need to be encrypted based on the securityConfig field. For example, after the securityConfig field is set, and no DRB or SRB is configured to be unencrypted by using the cipheringDisabled field, it indicates that data transmitted through all the DRBs and SRBs needs to be encrypted based on the securityConfig field.

It can be learned that whether any DRB in the communication needs to be encrypted may be configured by using the encrypted identifier and/or the encryption algorithm.

In different embodiments, the base station may configure whether the DRB needs to be encrypted for the UE by using the RRC reconfiguration message in one of the foregoing two encryption configuration manners. Alternatively, the base station may configure whether the DRB needs to be encrypted for the UE by using one or more RRC reconfiguration messages in both of the foregoing two encryption configuration manners.

It should be noted that, as specified in the existing protocol, once a value of the cipheringDisabled field for a same DRB is set, the value of the field cannot be changed before the DRB is not released.

For example, the base station sets a value of a cipheringDisabled field of a DRB-A to true by using an RRC reconfiguration message A1. Therefore, before the DRB-A is not released, all encryption configurations of the DRB-A need to remain unencrypted. After the RRC reconfiguration message A1, if the base station configures the securityConfig field for the current communication by using an RRC reconfiguration message A2, a configuration indicating that the cipheringDisabled field of the DRB-A is true also needs to be carried in the RRC reconfiguration message A2. Therefore, it is ensured that no change occurs before and after setting of the cipheringDisabled field of the DRB-A. In this way, by using the RRC reconfiguration message A2, the base station may instruct the UE to encrypt all radio bearers other than the DRB-A based on the securityConfig field. The DRB-A is not encrypted.

S102. The UE determines that verification succeeds based on the RRC reconfiguration message.

In this example, the UE may perform verification processing based on at least the field carried in the RRC reconfiguration message, to determine that the verification processing succeeds. In some cases, the UE may further perform verification processing with reference to a parameter configured in a field carried in a historical RRC reconfiguration message that has been received previously.

For example, when the base station configures whether the DRB is encrypted by using the encrypted identifier and the encryption algorithm, the UE may determine whether the verification processing item succeeds based on whether the encrypted identifier is changed when the base station configures the encryption algorithm for the UE. For example, the base station separately configures the encrypted identifier (for example, the cipheringDisabled field) and the encryption algorithm (for example, the securityConfig field) for the UE by using two different RRC reconfiguration messages. In this way, when the cipheringDisabled field of the same DRB in the two RRC reconfiguration messages is not changed, it corresponds to that the verification processing succeeds. On the contrary, when the cipheringDisabled field of the same DRB in the two RRC reconfiguration messages is changed, the protocol specification is violated, which corresponds to that the verification processing fails. The cipheringDisabled field may be set to true or not set (that is, the cipheringDisabled field is null). Therefore, for the same DRB, when the cipheringDisabled field is set to true in the first RRC reconfiguration message; and the securityConfig field is configured and the cipheringDisabled field is not configured (corresponding to that the cipheringDisabled field is null) in the second RRC reconfiguration message, the UE may assume that the cipheringDisabled field of the DRB is false based on the second RRC reconfiguration message. In this way, in the two different RRC reconfiguration messages, it may be understood as that a change occurs in the value of the cipheringDisabled field that is set for the same DRB, and it corresponds to that the verification processing fails.

With reference to the example in S101, the base station sets the cipheringDisabled field of the DRB-A to true for the UE by using the RRC reconfiguration message A1. Thereafter, when the base station configures the securityConfig field for the UE by using the RRC reconfiguration message A2, if the configuration that the cipheringDisabled field of the DRB-A is true is carried in the RRC reconfiguration message A2, the cipheringDisabled field of the DRB-A is not changed, which conforms to the protocol specification, and it corresponds to that the verification processing succeeds.

S103. The UE sends an RRC reconfiguration complete message to the base station. For example, the RRC reconfiguration complete message may include RRCReconfigurationComplete.

In this way, the current RRC reconfiguration procedure may be completed.

The example in FIG. 1 is described by using an example in which the UE determines that the verification processing succeeds based on the RRC reconfiguration message. In some other cases, the verification processing performed by the UE based on the RRC reconfiguration message may fail.

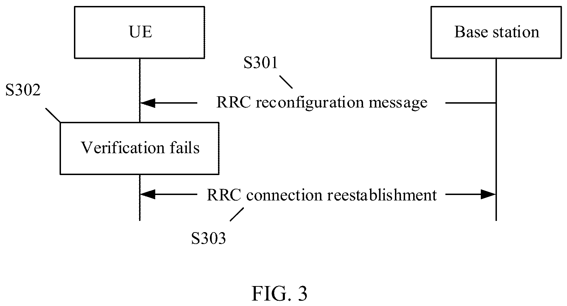

For example, refer to FIG. 3. FIG. 3 is a schematic diagram of interaction of another RRC reconfiguration procedure. FIG. 3 shows a specific example of a failed RRC reconfiguration.

As shown in FIG. 3, the procedure may include the following steps.

S301. A base station sends an RRC reconfiguration message to a UE.

For specific execution of S301, refer to S101 in FIG. 1.

S302. The UE determines, based on the RRC reconfiguration message, that verification fails.

With reference to the description in S102, when the base station configures whether the DRB is encrypted by using the encrypted identifier and the encryption algorithm, the UE may determine whether the verification processing item succeeds based on whether the encrypted identifier is changed when the base station configures the encryption algorithm for the UE. For example, the base station separately configures the encrypted identifier (for example, the cipheringDisabled field) and the encryption algorithm (for example, the securityConfig field) for the UE by using two RRC reconfiguration messages. When the cipheringDisabled field of the same DRB is changed in the two RRC reconfiguration messages, it corresponds to that the verification processing fails.

It should be noted that, if the cipheringDisabled field of the DRB-A is not carried in the RRC reconfiguration message, it corresponds to that the DRB-A needs to be encrypted. Compared with a case in which the cipheringDisabled field of the DRB-A is set to true, a case in which the cipheringDisabled field is changed also exists.

In a possible implementation, the base station sets a cipheringDisabled field of a DRB-B to true by using an RRC reconfiguration message B1. The base station configures the securityConfig field of the current communication for the UE by using an RRC reconfiguration message B2, and a configuration that the cipheringDisabled field of the DRB-B is true is not carried in the RRC reconfiguration message B2.

Therefore, the UE may determine that the verification processing fails because the cipheringDisabled field of the DRB-B configured in the two RRC reconfiguration messages is changed.

When the UE determines that the verification processing fails, the current RRC reconfiguration procedure ends, and the following S303 is performed.

S303. The UE initiates an RRC connection reestablishment procedure to the base station. For example, the RRC connection reestablishment procedure may be an RRC connection re-establishment procedure.

For example, the UE may send an RRC connection reestablishment request (for example, RRCReestablishmentRequest) to the base station. A cause value carried in the RRC connection reestablishment request may include: a reconfiguration failure (Reconfiguration failure).

Correspondingly, after the RRC connection reestablishment procedure shown in S303 in FIG. 3 is entered, the base station also makes a response.

For example, after receiving the RRC connection reestablishment request whose cause value is "Reconfiguration failure", the base station may search for context information of a current PDU session.

When the current base station can obtain the context information of the current PDU session, the base station may send an RRC reestablishment response (for example, RRCReestablishment) to the UE. Then, the UE may perform RRC reestablishment based on the RRC reestablishment response, and feed back an RRC reestablishment complete message (for example, RRCReestablishmentComplete) to the base station.

In this case, although the RRC connection reestablishment procedure can be successfully completed, the UE cannot communicate with the base station in a process of the RRC connection reestablishment procedure. Therefore, current communication freezing or interruption may occur in the process of the RRC connection reestablishment procedure.

Correspondingly, when the current base station cannot obtain the context information of the current PDU session, the base station may send an RRC establishment (RRCsetup) message to the UE. Then, the UE may perform RRC establishment based on the RRCsetup message, and feed back an RRC establishment complete message (for example, RRCSetupComplete) to the base station.

In this case, because the base station cannot obtain context of the UE in a previous communication process, the base station cannot continue to maintain the communication with the UE. In this way, a connection based on a message 503 is disconnected. Therefore, the communication being performed by the UE cannot be continued.

For specific execution of the foregoing RRC connection reconfiguration procedure, refer to relevant specifications on RRC connection re-establishment in R16 of the existing protocol.

In an actual live network, after the base station receives the RRC connection reestablishment request, regardless of whether context of the current PDU session can be found, interruption of a connection to the UE caused by insufficient bearer resources (insufficient bearer resources) may be triggered. Therefore, a problem of communication interruption occurs on a UE side.

In addition, after determining that the RRC reconnection procedure fails, the UE may trigger a radio link failure (RLF), and access a cell that is currently known to have good communication quality based on a configured policy. The process may also cause communication freezing before the RRC connection reestablishment procedure is entered.

To describe the foregoing problem more clearly, the following describes, by using a scenario in which the UE needs to perform cell handover (for example, to be handed over to a cell B) in a call with a cell A as an example, the foregoing RRC reconfiguration procedure shown in FIG. 3 and a subsequent case of triggering a call interruption after the RRC connection reestablishment procedure is entered.

The cell A and the cell B may be different cells belonging to a same base station. Alternatively, the cell A and the cell B may be different cells separately belonging to different base stations. In this application, communication between the UE and the cell A is communication between the UE and a base station to which the cell A belongs. Similarly, communication between the UE and the cell B is communication between the UE and a base station to which the cell B belongs.

For example, the base station to which the cell A belongs is a base station A, and the base station to which the cell B belongs is a base station B. In different implementations, the base station A and the base station B may be the same base station, or the base station A and the base station B may be different base stations.

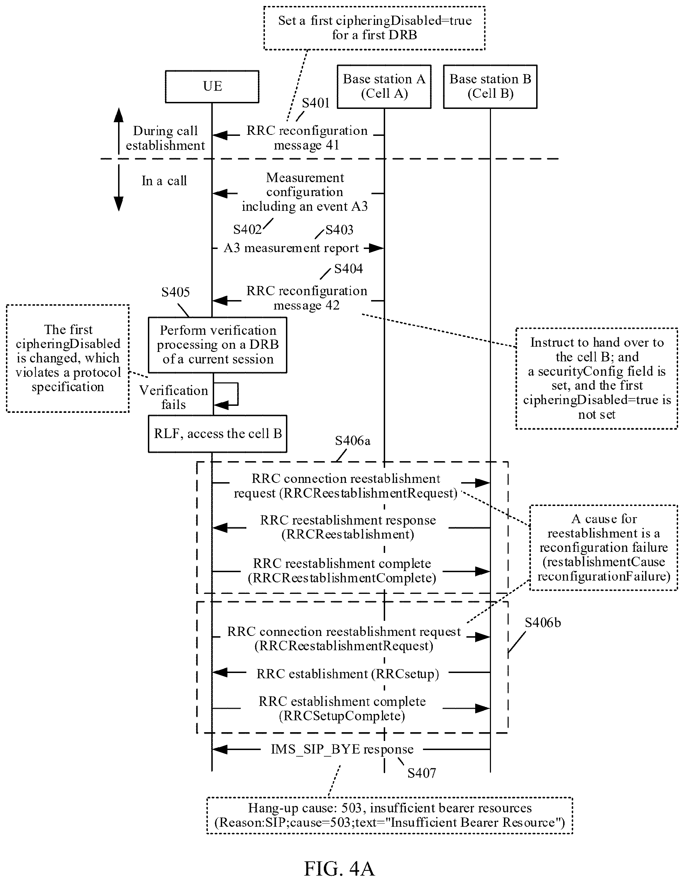

Refer to FIG. 4A. FIG. 4A is a schematic diagram of interaction between the UE and the cell in a scenario in which the UE establishes the call with the cell A by using the base station A and performs cell handover.

S401. The base station A sends an RRC reconfiguration message 41 to the UE.

For example, the RRC reconfiguration message 41 may be used for configuring a plurality of DRBs including a first DRB for the UE.

In some embodiments, as shown in FIG. 4A, the RRC reconfiguration message 41 may configure the first DRB for the UE in a call establishment process. In addition, the RRC reconfiguration message 41 may further include setting of a first cipheringDisabled field of the first DRB. For example, the RRC reconfiguration message 41 may include setting of the first cipheringDisabled=true. Therefore, it represents that the first DRB does not need to be encrypted.

In this scenario, the first DRB may be a DRB of an IP multimedia subsystem (IP multimedia subsystem, IMS). In some implementations, the RRC reconfiguration message 41 may be used for configuring the first DRB corresponding to 5QI=1 for the UE. 5QI is used as a reference for a 5G quality of service (Quality of Service, QoS) feature, that is, an access node-specific parameter (for example, a scheduling weight, an admission threshold, a queue management threshold, and a link layer protocol configuration) that controls QoS forwarding processing of a QoS flow (Flow).

In a specific implementation, an example in which the first DRB includes a drb-Identity 4 and a drb-Identity 5 of a pdu-Session 1 is used.

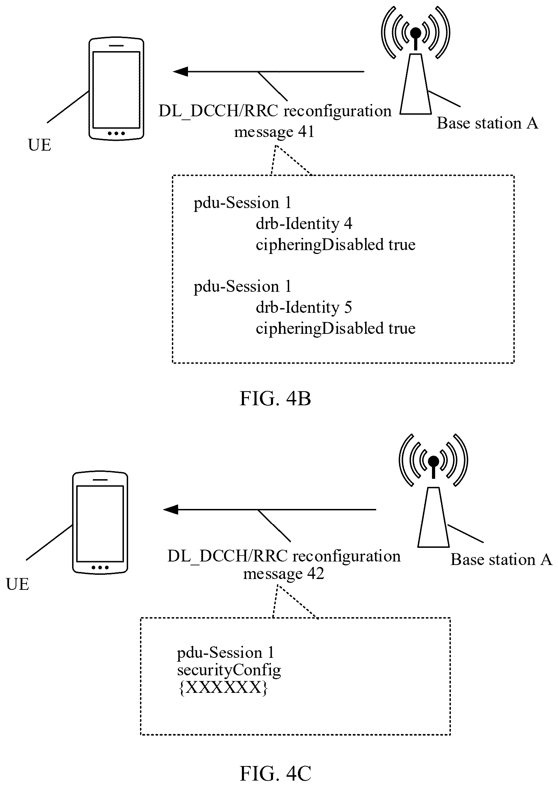

Refer to FIG. 4B. The base station A may send the RRC reconfiguration message 41 to the UE in a downlink dedicated control channel (DL_ Dedicated Control Channel, DL_DCCH) in a communication establishment process.

In an example shown in FIG. 4B, the base station A may configure a DRB resource in the pdu-Session 1 for the UE by using the RRC reconfiguration message 41. For example, the DRB resource in the pdu-Session 1 may include the drb-Identity 4 and the drb-Identity 5.

As shown in FIG. 4B, by using the RRC reconfiguration message 41, the base station A further sets an encrypted identifier (namely, cipheringDisabled) of the drb-Identity 4 to true, which corresponds to that the drb-Identity 4 is not encrypted. By using the RRC reconfiguration message 41, the base station A further sets an encrypted identifier (namely, cipheringDisabled) of the drb-Identity 5 to true, which corresponds to that the drb-Identity 5 is not encrypted.

After completing the call establishment, the UE may provide a call service for a user by using the cell A provided by the base station A, that is, enter an in-call stage.

It should be noted that, in the foregoing description of S401, an example in which the first cipheringDisabled field of the first DRB is set by using the RRC reconfiguration message 41 in the call establishment process is used for description. In some other embodiments of this application, the first DRB may alternatively be a default bearer configured after the UE is powered on. In this way, the first cipheringDisabled field of the first DRB may be configured after the UE is powered on (that is, before a communication establishment stage is started to be entered). Alternatively, the first cipheringDisabled field of the first DRB may be configured by using the RRC reconfiguration message 41 after a communication establishment stage is entered.

In the following examples, a solution implementation shown in FIG. 4A is continued to be used as an example.

S402. The base station A delivers a measurement configuration including an event A3 to the UE.

In this example, when a position of the UE moves to an edge of the cell A, or communication quality of a current access point becomes poor, cell handover measurement may be triggered.

When the cell handover measurement is triggered, the base station may deliver a corresponding measurement event to the UE. The UE may perform measurement based on the measurement event, and report a measurement report to the base station if a corresponding condition is satisfied. In this way, the base station may instruct the UE to perform cell handover based on the measurement report, or the UE automatically performs cell handover.

For example, the measurement event may include: the event A3, an event A2, an event B1, an event B2, and the like.

The event A3 (Event A3) is used for triggering intra-frequency measurement to be performed on a neighboring cell of a same network standard. The measurement report is uploaded when a reference signal received power (Reference Signal Receiving Power, RSRP) value of the neighboring cell is greater than RSRP of a camped cell and the RSRP value of the neighboring cell exceeds a corresponding threshold.

The event A2 (Event A2) is used for triggering measurement to be performed on the camped cell. The measurement report is uploaded when an RSRP value of the camped cell is less than the corresponding threshold.

The event B1 (Event B1) may be used for triggering measurement to be performed on a high-priority inter-system cell. The terminal uploads the measurement report when RSRP of the neighboring cell is higher than the corresponding threshold.

The event B2 (Event B2) may be used for triggering measurement to be performed on an inter-system cell of the same or lower priority. The terminal uploads the measurement report when the RSRP of the camped cell is lower than the corresponding threshold and RSRP of an inter-system neighboring cell is higher than the corresponding threshold.

In this example, an example in which the measurement event is the event A3 is used.

In this way, the base station A instructs, by delivering the measurement event A3, the UE to perform intra-system intra-frequency measurement. In the measurement event A3, the cell A is the camped cell, and the cell B is an intra-frequency intra-system neighboring cell.

S403. The UE sends an A3 measurement report to the base station A.

With reference to the description in S402, the UE may perform corresponding measurement based on the A3 measurement event. The UE may send a corresponding A3 measurement report to the base station when a measurement result satisfies an event A3 requirement.

For example, the UE may obtain an RSRP-cella of a current camped cell (such as the base station A), and the UE may obtain an intra-system intra-frequency RSRP-cellb of the cell B. When the RSRP-cellb is greater than the RSRP-cella, and the RSRP-cellb is greater than the corresponding threshold, the UE may perform S403, and send the A3 measurement report to a base station to which the base station A belongs.

S404. The base station A sends an RRC reconfiguration message 42 to the UE.

In this example, an example in which the RRC reconfiguration message 42 is sent after the base station receives the A3 measurement report is used. Therefore, it may be understood that, the base station A receives the A3 measurement report, which corresponds to that the UE determines, through measurement, that signal quality of the neighboring cell (for example, the cell B) is better than that of the current cell. Then, the base station A may instruct, by using the RRC reconfiguration message 42, the UE to be handed over to the cell B for camping.

For example, the RRC reconfiguration message 42 may include cell information of the cell B. The cell information of the cell B may be used for the UE to be handed over and camp on the cell B. In some embodiments, the cell information of the cell B may include information such as a cell ID and a frequency of the cell B.

In this example, the base station A may further configure an encryption algorithm of the current communication for the UE by using the RRC reconfiguration message 42.

In an example, refer to FIG. 4C. The base station A may send the RRC reconfiguration message 42 to the UE in the downlink dedicated control channel (DL_Dedicated Control Channel, DL_DCCH).

In the example shown in FIG. 4C, the base station A may set a securityConfig field corresponding to the current communication for the UE by using the RRC reconfiguration message 42. Through the setting, the base station A may instruct the UE to encrypt all the DRBs and SRBs in the current communication. In addition, in the RRC reconfiguration message 42, the base station A does not set any cipheringDisabled field for the UE. For example, the first cipheringDisabled corresponding to the first DRB is not included in the RRC reconfiguration message 42.

It may be understood that the RRC reconfiguration message 42 is used for instructing the UE to be handed over to the cell B. Correspondingly, the configuration of the securityConfig field is used for instructing the UE to encrypt all the DRBs and SRBs in a communication process with the cell B based on the securityConfig field.

In a specific implementation, with reference to the example in FIG. 4B, the pdu-Session 1 may include the plurality of DRBs such as the drb-Identity 4 and the drb-Identity 5. Therefore, through the setting of the securityConfig field, the base station A may instruct the UE to encrypt the plurality of DRBs including the drb-Identity 4, the drb-Identity 5, and the like, and another SRB.

S405. The UE performs verification processing on a DRB of a current session.

It may be understood that the verification processing may be a protocol compliance verification on information carried in the RRC reconfiguration message. Through the verification processing, the UE may determine whether currently configured parameters comply with a protocol specification. Therefore, when all the verifications succeed, the configured parameters are used to perform RRC connection reestablishment, so that the current communication continues to be maintained.

In this example, verification processing corresponding to the plurality of configurations may be performed sequentially in series, or may be performed in parallel. The verification processing corresponding to the plurality of configurations may include a first verification. The first verification corresponds to verification processing based on whether a cipheringDisabled setting of a same DRB (for example, the first DRB) is changed.

It may be understood that, if the first cipheringDisabled field of the first DRB is not changed, it corresponds to that the first verification succeeds. On the contrary, if the first cipheringDisabled field of the first DRB is changed before the first DRB is released, it corresponds to that the first verification fails.

An example in which the first verification is performed on the drb-Identity 4 is used.

In the RRC reconfiguration message 42, the base station A does not set cipheringDisabled of the drb-Identity 4. In this way, for the same drb-Identity 4, a cipheringDisabled field of the drb-Identity 4 is changed from "true" to null, indicating an operation whether the drb-Identity 4 is encrypted is also changed. Therefore, when the UE performs the first verification on the drb-Identity 4, the verification processing fails as shown in S302 in FIG. 3. The RRC reconfiguration procedure is exited.

Similarly, a similar verification processing failure occurs when the first verification is performed on the drb-Identity 5.

It may be understood that, in some implementations, when the UE determines that a verification failure occurs, the UE may directly exit the current RRC reconfiguration procedure. In some other implementations, after completing all the verification processing, when a plurality of verification processing results includes at least one verification failure, the UE may exit the current RRC reconfiguration procedure.

In this example, the UE may trigger a radio link failure (Radio Link Failure, RLF) after exiting the RRC reconfiguration procedure. In this way, the UE may access the cell according to the configured policy. For example, in the example shown in FIG. 4A, the UE may access the cell B with better signal quality.

In this way, because the RLF is triggered, freezing or interruption of the current communication is caused.

After the RRC reconfiguration procedure fails and is exited, with reference to FIG. 3, the UE may enter an RRC connection reestablishment procedure with a base station corresponding to the current access cell.

Reference is made to the description of the RRC connection reestablishment procedure in FIG. 3. When the base station can or cannot obtain context information of the UE, the RRC connection reestablishment procedure may be implemented in two different specific manners.

In the following S406a, an example in which the base station can obtain the context information of the UE in the current communication is used. The solution implementation may enable the RRC connection reestablishment to be successfully completed. In addition, in S406b, an example in which the base station cannot obtain the context information of the UE in the current communication is used. During the solution implementation, it corresponds to that the RRC connection reestablishment fails. It may be understood that in different scenarios, one of S406a and S406b may be selected to be performed based on an actual case. Detailed descriptions are separately provided below.

S406a. The UE initiates the RRC connection reestablishment procedure to the base station B, where the RRC connection reestablishment procedure is successfully completed.

It may be understood that, after the current UE triggers the RLF, the current UE has accessed the cell B of the base station B. Therefore, the UE may initiate the RRC connection reestablishment procedure to the base station to which the base station B belongs.

As shown in S406a, the process may specifically include: sending, by the UE, an RRC connection reestablishment request (RRCReestablishmentRequest) to the base station B. For example, a cause value of the RRCReestablishmentRequest may be set as: a reconfiguration failure (reestablishmentCause reconfigurationFailure). Correspondingly, the base station B may attempt to obtain context of the UE in the current communication. When the context in the current communication can be obtained, the base station B may send an RRC reestablishment response (RRCReestablishment) to the UE. Correspondingly, the UE may perform RRC reestablishment based on the RRC reestablishment response (RRCReestablishment), and send an RRC reestablishment complete (RRCReestablishmentComplete) to the base station B when completing the RRC reestablishment.

It may be understood that, in S406a, although finally, the RRC connection reestablishment succeeds, in a process of performing S406a, the UE cannot communicate with the base station B. In this way, after freezing of the RLF occurs, a problem of communication interruption occurs in a process of performing the RRC connection reestablishment procedure by the UE.

S406b. The UE initiates the RRC connection reestablishment procedure to the base station B, where the RRC connection reestablishment procedure fails.

It may be understood that, after the current UE triggers the RLF, the current UE has accessed the cell B of the base station B. Therefore, the UE may initiate the RRC connection reestablishment procedure to the base station to which the base station B belongs.

As shown in S406b, the process may specifically include: sending, by the UE, the RRC connection reestablishment request (RRCReestablishmentRequest) to the base station B. For example, a cause value of the RRCReestablishmentRequest may be set as: a reconfiguration failure (reestablishmentCause reconfigurationFailure). Correspondingly, the base station B may attempt to obtain the context of the UE in the current communication. When the context in the current communication cannot be obtained, the base station B may send an RRC establishment (RRCsetup). Correspondingly, the UE may feedback an RRC establishment complete (RRCSetupComplete) to the base station B.

It may be understood that in an example of S406b, the base station B cannot obtain the context of the UE, and therefore cannot continue to provide a current communication service for the UE. Then, after communicating with a related node in a service control network, the base station B may transmit a received IMS_SIP_BYE response to the UE (as shown in S407 in FIG. 4A). For example, Reason:SIP;cause=503;text="Insufficient Bearer Resource", used for indicating that a hang-up cause lies in insufficient bearer resources, can be carried in the IMS_SIP_BYE response. In this way, the base station B may be disconnected from the UE from a current communication connection. In this way, after the freezing of the RLF occurs, the UE cannot continue to maintain the current communication after entering the RRC connection reestablishment procedure. Consequently, a problem like a call interruption is caused.

It may be understood that the foregoing example in FIG. 4A is merely an example of triggering the RRC connection reestablishment shown in FIG. 3.

For example, the scenario shown in FIG. 4A is a plurality of times of configuration for the RRC reconfiguration message caused by cell handover. In another example, the base station may alternatively configure a case in which the cipheringDisabled field of the same DRB is changed by using a plurality of RRC reconfiguration messages. Further, the verification processing failure shown in S302, and the RRC connection reestablishment shown in S303 are triggered.

For another example, in the scenario shown in FIG. 4A, the verification processing failure is caused by a change conflict of the cipheringDisabled field of the DRB. In another example, the UE may alternatively perform verification processing on another configuration of the DRB. When a corresponding verification processing item fails, the RRC connection reestablishment shown in FIG. 3 is also triggered, thereby causing a subsequent call interruption.

For another example, in the scenario shown in FIG. 4A, that the UE sends an RRC connection reestablishment request message to the base station to enter the RRC connection reestablishment procedure is triggered by the verification processing failure. In another example, the UE may alternatively send the RRC connection reestablishment request message to the base station based on another protocol requirement, to enter the RRC connection reestablishment procedure, thereby causing the subsequent call interruption.

To resolve the foregoing problem, an embodiment of this application provides a communication method, so that the UE can automatically ignore a verification processing failure item that does not affect a subsequent call based on a preset ignorable verification protocol item. In this way, the UE can successfully complete the RRC reconfiguration procedure. In this way, when a verification failure occurs in ignorable verification processing, the UE does not experience call freezing corresponding to the RLF, nor experience a call interruption caused by entering the RRC connection reestablishment.

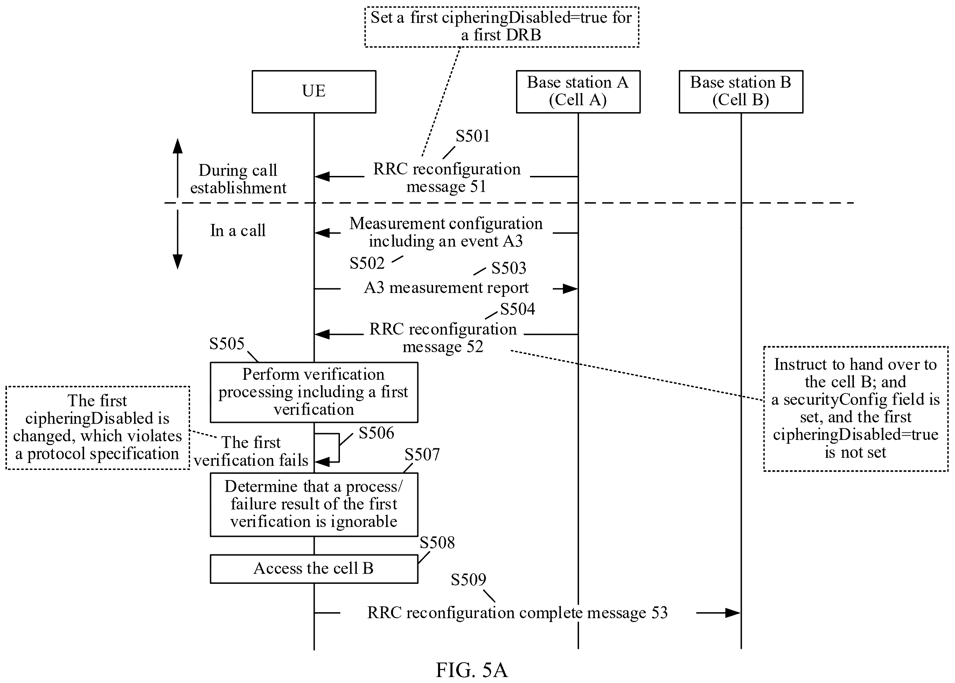

In an example, FIG. 5A is a schematic diagram of interaction of a communication method according to an embodiment of this application. An example in which a first verification fails and a failure result of the first verification is ignorable is used.

As shown in FIG. 5A, the solution may include the following steps.

S501. A base station A sends an RRC reconfiguration message 51 to a UE.

For example, for execution of S501, refer to S401 in FIG. 4A. The RRC reconfiguration message 51 may correspond to the RRC reconfiguration message 41 in FIG. 4A.

With reference to the description in FIG. 4A, in this example, an example in which the RRC reconfiguration message 51 is sent in a call establishment process is used, and an example in which a first cipheringDisabled=true setting of a first DRB corresponding to an IMS is performed is used. In some other embodiments, the first DRB may alternatively be a default bearer. In this way, the first cipheringDisabled=true setting may alternatively be set before the call establishment process is entered, or the first DRB is configured after the UE is powered on, and the first cipheringDisabled=true setting may be set in the call establishment process.

S502. The base station A sends a measurement configuration including an event A3 to the UE.

For example, for execution of S502, refer to S402 in FIG. 4A.

The base station A may be a base station of a cell (such as a cell A) currently accessed by the UE. S502 may be cell handover measurement caused by degradation of current communication quality due to reasons such as movement of the UE after the UE is in a call. The measurement configuration for the event A3 may include cell information of a cell B, for example, a cell identifier and a cell frequency of the cell B. Therefore, the UE is instructed to perform measurement on the cell B and the currently camped cell A.

In this example, an example in which the cell handover measurement includes the event A3 is used. With reference to the description in S402, in some other embodiments, the cell handover measurement may further include an event A2, an event B1, an event B2, and the like.

S503. The UE sends an A3 measurement report to the base station A.

For example, for execution of S503, refer to S403 in FIG. 4A.

For example, when an A3 event requirement is satisfied, the UE may generate and feedback the A3 measurement report to the base station A. In this way, the base station A learns that the current cell B satisfies a cell handover requirement corresponding to the event A3.

S504. The base station A sends an RRC reconfiguration message 52 to the UE.

For example, for execution of S504, refer to S404 in FIG. 4A. The RRC reconfiguration message 52 may correspond to the RRC reconfiguration message 42 in FIG. 4A.

In this example, the RRC reconfiguration message 52 may include the cell information of the cell B. The cell information of the cell B may be used for the UE to be handed over to and camp on the cell B. In some embodiments, the cell information of the cell B may include information such as the cell identifier and the frequency of the cell B.

In addition, the RRC reconfiguration message 52 may further include a securityConfig field. In addition, the RRC reconfiguration message 52 does not include setting of the first cipheringDisabled corresponding to the first DRB.

In other words, by using the RRC reconfiguration message 52, the base station A may instruct the UE to be handed over to and camp on the cell B. In communication with a base station B corresponding to the cell B, all the DRBs and SRBs are encrypted based on the securityConfig field.

S505. The UE performs verification processing including the first verification.

Reference is made to the description of the verification processing in the foregoing example. After the UE receives the RRC reconfiguration message from the base station A and enters an RRC reconfiguration procedure, the UE may perform verification processing on each configured parameter at least once. In this example, the verification processing may include the first verification. The first verification corresponds to verification processing based on whether a cipheringDisabled setting of a same DRB (for example, the first DRB) is changed. The first verification succeeds when the first cipheringDisabled setting of the first DRB is not changed. On the contrary, the first verification fails when the first cipheringDisabled setting of the first DRB is changed.

In the following example, an example in which verification processing other than the first verification succeeds is used. In other words, when the first verification succeeds, the UE successfully completes the RRC reconfiguration procedure based on the mechanism shown in FIG. 1.

S506. The UE determines that the first verification fails.

In this example, for the first DRB, the base station A sets the first cipheringDisabled=true by using the RRC reconfiguration message 51. The base station A sets the securityConfig field by using the RRC reconfiguration message 52, and does not include the first cipheringDisabled. In this way, the first cipheringDisabled setting is changed from "true" to null. Therefore, the first verification on the first DRB fails.

S507. The UE determines that a process/failure result of the first verification is ignorable.

For example, the UE may be preconfigured with at least one ignoring identifier. One ignoring identifier corresponds to one verification. For example, a first ignoring identifier corresponds to the first verification.

In some embodiments, each ignoring identifier may be set with a different value.

In a possible implementation, when the ignoring identifier is set to a third value, it represents that a process of corresponding verification processing is ignorable. In this way, the UE may selectively perform or skip the verification processing, so that when the verification processing is performed, verification results of the verification processing are all considered to succeed. When the verification processing is skipped, the verification result is also considered to succeed.

For example, the first ignoring identifier is set to the third value, which represents that the processing process of the first verification is ignorable. In other words, whether the first verification is performed and whether a performance result of the first verification succeeds are ignorable. Then, when needed to perform the first verification, the UE may skip the first verification, and consider that the first verification succeeds. Alternatively, the UE may perform the first verification, and consider that the first verification succeeds when the result of the first verification succeeds or fails.

In another possible implementation, when the ignoring identifier is set to a fourth value, it represents that a failure result of corresponding verification processing is ignorable. In this way, the UE may perform the verification processing, and ignore the failure result when the verification processing fails. Other processing is continued to be performed based on that the verification processing succeeds. Alternatively, when determining that the ignoring identifier is the fourth value, the UE may learn that a result of verification processing that currently needs to be performed is ignorable even if the result indicates a failure. Then, the UE may alternatively skip the verification processing, and directly consider that the verification processing succeeds.

For example, the first ignoring identifier is set to the fourth value, which represents that the failure result of the first verification is ignorable. In this way, in some implementations, the UE may perform the first verification, and ignore the failure result when the first verification fails. In other words, it is considered that the first verification succeeds. In some other implementations, before performing the first verification, the UE may determine that the first ignoring identifier is the fourth value, to determine that no matter the first verification succeeds or fails, it may be considered that the verification succeeds. Then, the UE may skip the first verification.

The foregoing example describes a specific implementation in which the verification result is ignorable or the verification process is ignorable by using an example. Correspondingly, when the first ignoring identifier is set to a fifth value, it represents that the verification result is not ignorable. When the first ignoring identifier is set to a sixth value, it represents that the verification process is not ignorable. In this way, when the UE may determine that the first ignoring identifier is the fifth value or the sixth value before performing the first verification, the UE continues to perform the first verification. When the UE obtains a verification failure result after performing the first verification, the UE may continue to determine that the failure result is not ignorable when determining that the first ignoring identifier is the fifth value or the sixth value, trigger the RLF shown in FIG. 4A, determine that the RRC reconfiguration procedure fails, and enter an RRC connection reconfiguration procedure.

It should be noted that, that whether the process/result of the corresponding verification processing is ignorable is determined by using the value of the ignoring identifier is merely a specific implementation. In some other embodiments of this application, the ignoring identifier may not include a specific value. Then, for verification processing configured with the ignoring identifier, it may represent that a process/result of the verification processing is ignorable. On the contrary, for verification processing not configured with the ignoring identifier, it represents that a process and a result of the verification processing are not ignorable.

It may be understood that, in a specific implementation process, the at least one ignoring identifier may be included in configuration information stored in an electronic device.

For example, the configuration information may include first indication information, and the first indication information corresponds to any one of at least one ignorable identifier. Therefore, the first indication information may point to corresponding verification processing of a corresponding ignoring identifier. For example, the first indication information may point to the first verification. The first indication information indicates that the process/result of the corresponding verification processing (for example, the first verification) is ignorable. During specific implementation, setting of a value in the first indication information, or whether the first indication information is set may be implemented with reference to the setting of the foregoing ignorable identifier. For example, when the first indication information is set to the fourth value, it represents that the failure result of the first verification is ignorable. When the value of the first indication information is set to the third value, it represents that the process of the first verification is ignorable. When the value of the first indication information is set to the fifth value, it represents that the failure result of the first verification is not ignorable. When the value of the first indication information is set to the sixth value, it represents that the process of the first verification is not ignorable. During specific implementation, the third value and the fourth value may be the same. The fifth value and the sixth value may also be the same. Therefore, the value of the first indication information may include two cases: When the value of the first indication information is the third value or the fourth value, it indicates that the process/result of the first verification is ignorable. When the value of the first indication information is the fifth value or the sixth value, it indicates that the process/result of the first verification is not ignorable. In some other embodiments, the first indication information is only configured for verification processing of an ignorable process/result in the configuration information. In other words, the UE may determine whether the current verification processing is ignorable based on the setting of the first indication information. For example, if the first verification is configured with the first indication information, it corresponds to that the process/result of the first verification is ignorable. On the contrary, if the first verification is not configured with the first indication information, it corresponds to that the process/result of the first verification is not ignorable.

In a possible implementation, the first indication information in the configuration information may be stored in a particular entry of the electronic device, so that the electronic device invokes the particular entry when performing S507, and determines whether the process/result of the currently performed verification processing is ignorable. In another possible implementation, the first indication information in the configuration information may alternatively be stored in a particular code segment in the UE, so that when performing S507, the electronic device invokes the particular code segment, and determines whether the process/result of the currently performed verification processing is ignorable.

In this way, in this example, although the first verification violates a protocol specification because the first cipheringDisabled is changed, the UE may determine that the process/failure result of the first verification is ignorable. Therefore, the UE may consider that all the verifications succeed when other verification items succeed, and confirm that the current RRC reconfiguration procedure can be continued.

S508. The UE accesses the cell B.

It may be understood that when all the verification processing succeeds, the UE may be handed over to and camp on the cell B to continue the current call according to a handover instruction to the cell B configured by the RRC reconfiguration message 52.

S509. The UE sends an RRC reconfiguration complete message 53 to the base station B.

In this way, although a verification failure of the first verification occurs in the verification processing process, the UE may further continue the current RRC reconfiguration procedure when determining that the process/failure result of the first verification is ignorable, and camp on the cell B according to the handover instruction delivered by the base station to continue the current call. In this way, the RLF may be avoided, or an RRC connection reestablishment procedure may be entered. Further, a resulting problem of call freezing or interruption is avoided.

It may be understood that in a solution implementation shown in FIG. 5A, an example in which the UE determines that the process/failure result of the first verification is ignorable after the UE performs the first verification and determines that the first verification fails is used. In some other embodiments, before performing the first verification, the UE may alternatively determine that the process/failure result of the first verification is ignorable.

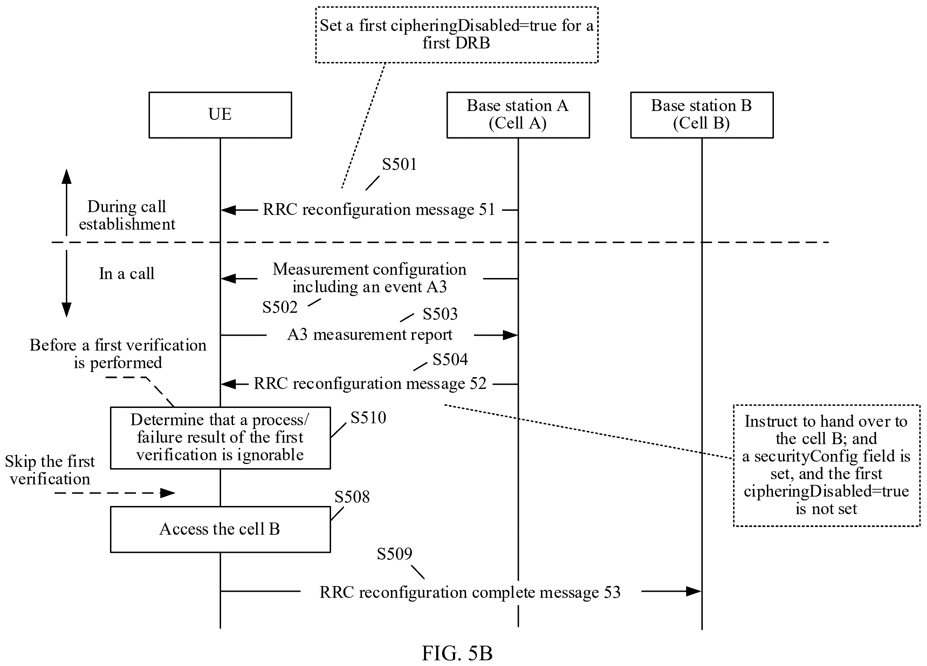

In an example, refer to FIG. 5B. FIG. 5B is a schematic flowchart of a communication method according to an embodiment of this application.

With reference to the solution implementation in FIG. 5A, in a solution shown in FIG. 5B, the UE may perform verification processing after receiving the RRC reconfiguration message 52. The example in which all other verification processing except the first verification succeeds is continued to be used. During the solution implementation shown in FIG. 5B, before performing the first verification processing, the UE may perform S510, to determine that the process/failure result of the first verification is ignorable. It may be understood that for a specific implementation of S510, refer to S507 shown in FIG. 5A. In this way, before performing the first verification, the UE may learn that the process/failure result of the first verification has no impact on a success of a subsequent RRC reconfiguration procedure. Then, in this example, the UE may skip performance of the first verification, and directly perform S508 as the RRC reconfiguration procedure succeeds, that is, access the cell B under indication of the RRC reconfiguration message 52. Next, the UE may perform S509, to send the RRC reconfiguration complete message 53 to the base station B of the currently accessed cell. Therefore, the UE can save time of the first verification and overheads of power consumption.

In this way, through the solution implementations in FIG. 5A and FIG. 5B, whether the process/failure result of the verification processing corresponding to the verification failure is ignorable is determined based on the embodiments of this application, so that for preset ignorable verification processing, the RLF caused by the verification failure and the entering of the RRC connection reconfiguration procedure can be avoided, that is, a corresponding communication interruption can be avoided.

In FIG. 5A and FIG. 5B, the descriptions are provided by using an example in which the ignorable verification processing is the first verification processing. In some other embodiments of this application, the ignorable verification processing may further include other verification processing.

In view of this, an embodiment of this application further provides a communication method, so that when a verification failure occurs in preset ignorable verification processing, an effect of successfully completing the RRC reconfiguration procedure in the examples shown in FIG. 5A and FIG. 5B can be obtained.

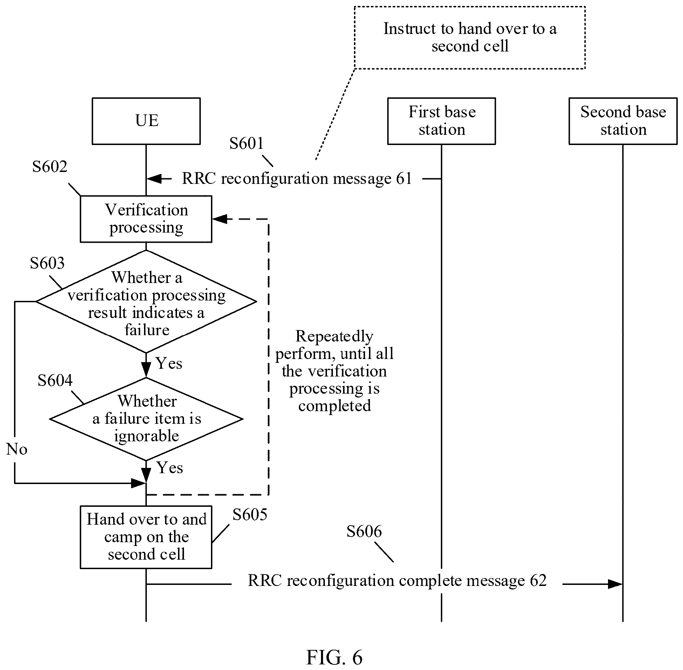

For example, refer to FIG. 6. An example in which a first base station corresponding to a first cell currently accessed by a UE instructs the UE to access a second cell is used. The second cell corresponds to a second base station. The solution may include the following steps.

S601. The UE receives an RRC reconfiguration message 61 from the first base station.

For example, the RRC reconfiguration message 61 may correspond to the RRC reconfiguration message 52 shown in FIG. 5A or FIG. 5B. In some implementations, the RRC reconfiguration message 61 may include the securityConfig field in the foregoing example. In some other implementations, the RRC reconfiguration message 61 may further include another field set for the UE.

S602. The UE performs verification processing.

For example, the UE may perform at least one verification after entering the RRC reconfiguration procedure. For example, the at least one verification may include a first verification. For example, the at least one verification may further include another protocol compliance verification.

It should be noted with reference to the foregoing descriptions that, in an implementation of S602, an object of the verification processing may include a parameter delivered in the RRC reconfiguration message 61. In some other implementations, the object of the verification processing may alternatively include a parameter delivered by another RRC reconfiguration message prior to the RRC reconfiguration message 61.

S603. The UE determines whether a verification processing result indicates a failure for each verification. If the verification processing result indicates the failure, S604 is performed.

S604. The UE determines whether a failure item is ignorable. If the failure item is ignorable, S605 is performed. At least one ignoring identifier may be preset in the UE, and one ignoring identifier corresponds to one verification. The UE may determine that the current failure item is ignorable based on a value of the ignoring identifier, or a configured ignoring identifier. For a specific performance process, refer to S507 shown in FIG. 5A. Details are not described herein again.

In this example, an example in which the UE first performs the verification processing, and then determines whether the verification processing is ignorable is used. With reference to the description in FIG. 5B, in some other embodiments, before performing the verification processing, the UE may alternatively determine whether the verification processing is ignorable. In this way, if the process/failure result of the verification processing is ignorable, the UE may selectively perform or skip the verification processing. When the verification processing is performed and the verification fails, the result may be considered as indicating a success, to continue another verification.

It should be noted that, as shown in FIG. 6, when there is a plurality of verifications, the UE may perform S602 to S604 for each verification, until all the verifications are completed, and determine that all the verifications succeed, or the verification failure result is ignorable. Then, the UE may perform the following S605.

S605. The UE is handed over to and camps on the second cell.

When all the verifications succeed, or the verification fails and the verification failure result is ignorable, the UE may continue to perform the RRC reconfiguration procedure based on the configuration of the base station A. For example, the UE may be handed over to and camp on the second cell based on cell information of the second cell that is carried in the RRC reconfiguration message 61.

S606. The UE sends an RRC reconfiguration complete message 62 to the second base station.

It may be understood that because all the verifications succeed, or the verification fails and the verification failure result is ignorable, the UE can successfully complete the RRC reconfiguration procedure. In this way, with reference to the example in FIG. 1, the UE may send the RRC reconfiguration complete message 62 to the second base station corresponding to a current camped cell (for example, the second cell).

In this way, based on the solution shown in FIG. 6, the UE may ignore a process/failure result of corresponding verification processing based on at least one ignoring identifier preset therein. Therefore, an RLF caused by a verification failure of the corresponding verification processing and entering of RRC connection reestablishment are avoided, and a corresponding call interruption is further avoided.

In the foregoing solution implementations, an example in which the UE is handed over to the second base station for accessing according to an instruction of the first base station and sends the RRC reconfiguration complete message is used. The solution provided in this embodiment of this application may further be applied to a scenario in which the UE always camps on the first cell corresponding to the first base station.

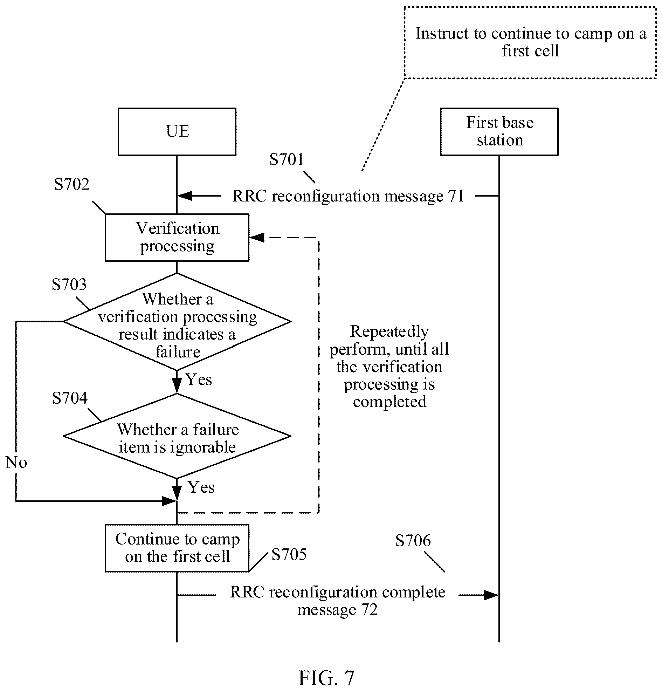

For example, refer to FIG. 7. FIG. 7 is a schematic flowchart of another communication method according to an embodiment of this application.

As shown in FIG. 7, the solution may include the following steps.

S701. A UE receives an RRC reconfiguration message 71 from a first base station.

S702. The UE performs verification processing.

S703. The UE determines whether a verification processing result indicates a failure for each verification. If the verification processing result indicates the failure, S704 is performed.

S704. The UE determines whether a failure item is ignorable. If the failure item is ignorable, S705 is performed.

S705. The UE continues to camp on a first cell.

S706. The UE sends an RRC reconfiguration complete message 72 to the first base station.

In this example, with reference to the solution in FIG. 6, for execution of the steps, refer to each other. A difference therebetween lies mainly in that, in this example, the RRC reconfiguration message 71 is different from the RRC reconfiguration message 61. The RRC reconfiguration message 71 may carry cell information of a current camped cell (for example, the first cell), or the RRC reconfiguration message 71 may not include cell information. In this way, the UE may continue to camp on the current first cell after successfully completing a current RRC reconfiguration procedure. For example, after S704, if all the verifications succeed, or the verification processing indicating that the verification fails is ignorable, the UE may continue to camp on the first cell. Correspondingly, in S706, the UE may send the RRC reconfiguration complete message 72 to the first base station of the first cell on which the UE currently camps.

In the foregoing descriptions of FIG. 5A to FIG. 7, the UE may configure, by configuring a corresponding ignoring identifier for each verification (or configuring a specified ignoring identifier for an ignorable verification), whether the verification is ignorable.

In some other embodiments of this application, the UE may further be configured to manage and control all ignoring configurations.

For example, a skip (skip) switch may be configured in the UE, and the skip switch is configured to enable capabilities of one or more ignoring configurations. For example, an ignoring identifier is configured for each verification, and the process/failure result of the verification processing in which the ignoring identifier is the third value or the fourth value is ignorable.

In this way, when the skip switch is turned on, an ignoring configuration of verification processing in which each ignoring identifier is the third value or the fourth value is valid. For example, if the ignoring identifier of the first verification is the third value, the UE may ignore the failure result when the first verification fails. Alternatively, the UE may skip the first verification. For another example, if the ignoring identifier of the first verification is the fourth value, the UE may ignore the failure result when the first verification fails. Alternatively, the UE may skip the first verification.

Correspondingly, when the skip switch is turned off, the ignoring configuration is not valid. For example, the ignoring identifier of the first verification is the first value. Because the skip switch is turned off, if the verification fails in the first verification, a corresponding RLF and subsequent RRC connection reestablishment are triggered.

In addition, when a plurality of ignoring identifiers are configured in the UE, the skip switch may be configured to perform overall management and control. For example, when the plurality of ignoring identifiers are all the third value or the fourth value, if the skip switch is turned off, none of the failure results of the corresponding verification processing or the ignoring configurations of the verification processing process is valid.

It should be noted that, a specific implementation of the ignoring identifier is described with reference to S507. In some embodiments of this application, the skip switch may be configured in the configuration information including the first indication information. The first indication information corresponds to any one of the at least one ignoring identifier. In this way, in an implementation in which the UE is configured to determine whether the skip switch is turned on, the UE may invoke the configuration information, to obtain information in which the current skip switch is turned on or turned off from an agreed field/entry in the configuration information.

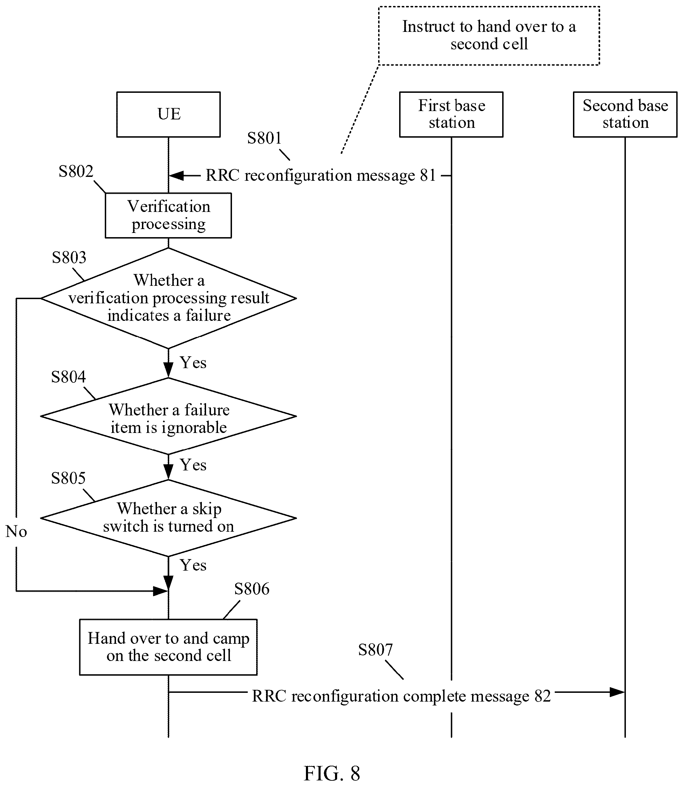

In an example, refer to FIG. 8. In an example in FIG. 8, determining logic of the skip switch is described by using an example based on the solution implementation shown in FIG. 6. Similarly, in the solution shown in FIG. 7, the overall management and control may also be performed with reference to the determining logic of the skip switch. A specific implementation is similar to that described above, and details are not described herein again.

As shown in FIG. 8, the solution may include the following steps.

S801. A base station A sends an RRC reconfiguration message 81 to a UE.

S802. The UE performs verification processing.

S803. The UE determines whether a verification processing result indicates a failure for each verification. If the verification processing result indicates the failure, S804 is performed.

S804. The UE determines whether a failure item is ignorable. If the failure item is ignorable, S805 is performed.

S805. The UE determines whether the skip switch is turned on. If the skip switch is turned on, S806 is performed.

S806. The UE is handed over to and camps on a second cell.

S807. The UE sends an RRC reconfiguration complete message 82 to a second base station.

In the solution implementation shown in FIG. 8, for execution of the steps, refer to the solution implementation shown in FIG. 6. In this example, before S806, the UE may determine whether the skip switch is turned on when determining that at least one failure item is ignorable. If the skip switch is turned on, all corresponding skip configurations are valid. In this way, the UE may confirm that all verification failure results or a process of corresponding verification processing is ignorable, successfully perform an RRC reconfiguration procedure, and be handed over to and camp on the second cell to continue a current call. Correspondingly, if the at least one failure item is ignorable, but the skip switch is turned off, in this way, the UE may exit the current RRC reconfiguration procedure, trigger the RLF, and enter an RRC connection reconfiguration procedure based on at least one verification failure result.

An example in which a first verification fails, and a process/failure result of the first verification is ignorable is used. The UE may determine whether the skip switch is turned on when determining that the process/failure result of the first verification is ignorable. If the skip switch is turned on, and all other verifications succeed, the UE may confirm that the RRC reconfiguration procedure is successfully performed, and be handed over to and camp on the second cell to continue the current call.

In the solution example shown in FIG. 8, when determining that the failure item corresponding to the verification processing result is ignorable, the UE may perform a subsequent operation like S805. In some other cases, the current verification processing result is not ignorable. Correspondingly, an embodiment of this application further provides a communication method, so that a UE performs corresponding processing when determining that a current verification failure result or a verification process is not ignorable. In an example, the solution may include: A first base station sends an RRC reconfiguration message 91 to the UE. The UE performs verification processing. The UE determines whether a verification processing result indicates a failure. For example, after performing a first verification, the UE determines that the first verification fails. The UE determines whether a failure item is ignorable. In some embodiments, if all verification failure results are ignorable, the UE may continue to perform a subsequent operation. In some other embodiments, if the verification failure is not ignorable, the UE may jump to perform a subsequent operation. For example, after completing the first verification, the UE may determine that the first verification fails. Correspondingly, the UE may query for a verification configuration value corresponding to the first verification. When the verification configuration value of the first verification represents that the first verification is not ignorable, the UE initiates an RRC connection reestablishment procedure to a second base station. The base station is prevented from determining that the RRC reconfiguration is completed, resulting in that current communication cannot be continued.

When all the verification failure results are ignorable, the UE determines whether the skip switch is turned on.

When the skip switch is turned on, the UE is handed over to and camps on a second cell. Next, the UE may send an RRC reconfiguration complete message 92 to the second base station.

On the contrary, when the skip switch is turned off, the UE may initiate an RRC connection reestablishment procedure to the second base station. The base station is prevented from determining that the RRC reconfiguration is completed, resulting in that current communication cannot be continued.

In this example, when the failure item is not ignorable, or when the skip switch is turned off, the UE may stop a current RRC reconfiguration procedure, and instead initiate the RRC connection reestablishment procedure to a base station (for example, the second base station) to which a current camped cell (for example, the second cell) belongs.

In the description of FIG. 8, the UE may determine whether the skip switch is turned on after determining whether the failure item is ignorable. In some other embodiments of this application, the UE may further determine whether the failure item is ignorable after determining whether the skip switch is turned on. A sequence of triggering execution to determine whether the failure item is ignorable or determine whether the skip switch is turned on is not limited in this application.

Therefore, according to the solutions provided in FIG. 5A to FIG. 8, the UE may not end the RRC reconfiguration procedure when an ignorable verification protocol failure item (for example, a setting of a cipheringDisabled field of a same DRB is changed) occurs in the RRC reconfiguration procedure. In this way, the UE does not enter the RRC connection reestablishment procedure with the base station, thereby avoiding a resulting problem of communication interruption.

The solutions provided in the embodiments of this application are described above mainly from a perspective of the electronic device (for example, the UE). A person skilled in the art should be easily aware that, in combination with units and algorithm steps of the examples described in the embodiments disclosed in this specification, this application can be implemented in a form of hardware or a combination of hardware and computer software. Whether some function is performed in a manner of hardware or of computer software driving hardware depends on a specific application and design constraints of the technical solution. A person skilled in the art may use different methods to implement the described functions for each particular application, but it should not be considered that the implementation goes beyond the scope of this application.

The integrated module may be implemented in the form of hardware, or may be implemented in a form of a software functional module. It should be noted that, module division in this embodiment of this application is an example, and is merely logical function division. During actual implementation, there may be another division manner.

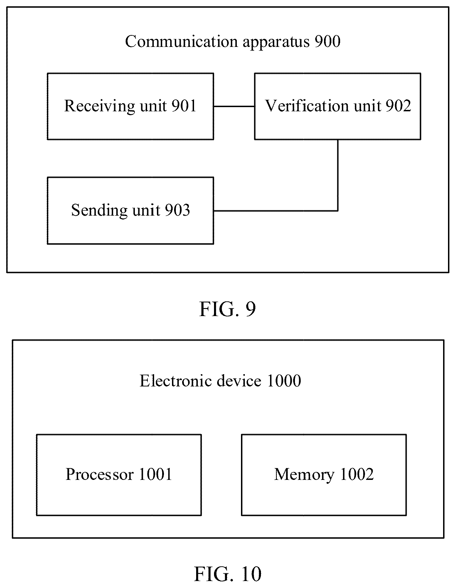

For example, FIG. 9 is a schematic diagram of composition of a communication apparatus 900. The communication apparatus 900 may be applied to an electronic device (such as a UE). The communication apparatus 900 shown in FIG. 9 may be configured to implement the communication method provided in any one of FIG. 5A to FIG. 8.

As shown in FIG. 9, the communication apparatus 900 may include:
a receiving unit 901, configured to receive a first radio resource control (RRC) reconfiguration message;
a verification unit 902, configured to perform verification processing, where the verification processing includes a first verification; and
a sending unit 903, configured to send a first RRC reconfiguration complete message when a verification failure result of the first verification is ignorable, or a process of the first verification is ignorable.

It should be noted that, all related content of the steps related to foregoing method embodiments may be quoted to the functional descriptions of the corresponding functional modules. Details are not described herein again.

Refer to FIG. 10. FIG. 10 is a schematic diagram of composition of an electronic device 1000 according to an embodiment of this application. As shown in FIG. 10, the electronic device 1000 may include a processor 1001 and a memory 1002. The memory 1002 is configured to store computer-executable instructions. For example, in some embodiments, when the processor 1001 executes the instructions stored in the memory 1002, the electronic device 1000 may be enabled to perform the method shown in any one of the foregoing embodiments.

It should be noted that, all related content of the steps related to foregoing method embodiments may be quoted to the functional descriptions of the corresponding functional modules. Details are not described herein again.

It may be understood that, in an example shown in FIG. 10, a schematic diagram of composition of a possible electronic device is provided. The electronic device may correspond to the UE related to the foregoing embodiments.

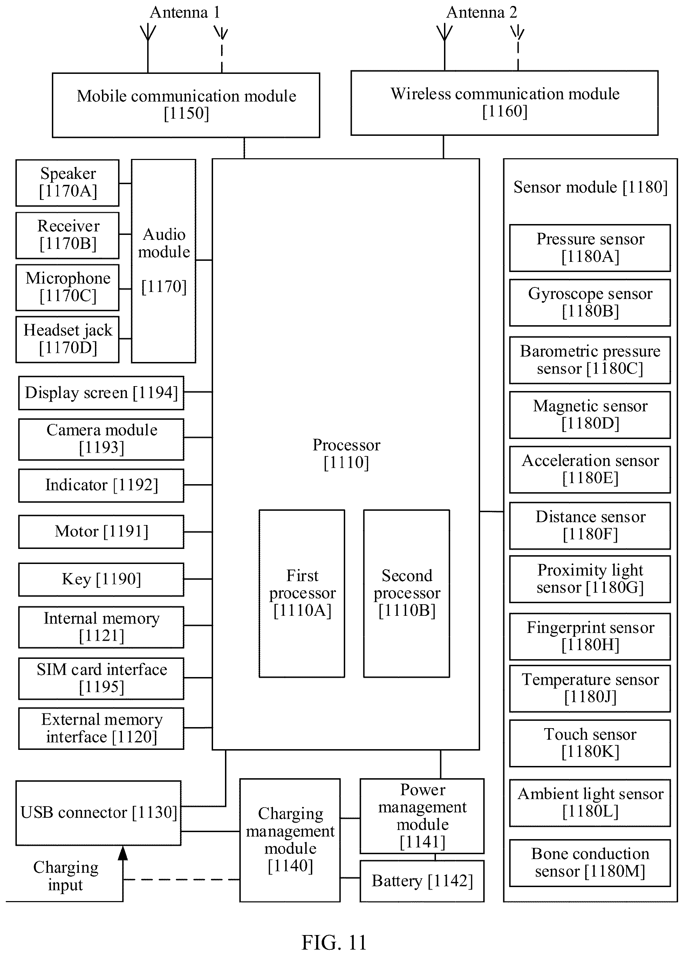

In some other embodiments, as shown in FIG. 11, an embodiment of this application further provides composition of another possible electronic device.

In the example, the electronic device may include at least one of the following: a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, or a smart city device. A specific type of the electronic device is not specially limited in this embodiment of this application.

The electronic device may include a processor 1110, an external memory interface 1120, an internal memory 1121, a universal serial bus (universal serial bus, USB) connector 130, a charging management module 1140, a power management module 1141, a battery 1142, an antenna 1, an antenna 2, a mobile communication module 1150, a wireless communication module 1160, an audio module 1170, a speaker 1170A, a receiver 1170B, a microphone 1170C, a headset jack 1170D, a sensor module 1180, a key 1190, a motor 1191, an indicator 1192, a camera module 1193, a display screen 1194, a subscriber identification module (subscriber identification module, SIM) card interface 1195, and the like. The sensor module 1180 may include a pressure sensor 1180A, a gyroscope sensor 1180B, a barometric pressure sensor 1180C, a magnetic sensor 1180D, an acceleration sensor 1180E, a distance sensor 1180F, a proximity light sensor 1180G, a fingerprint sensor 1180H, a temperature sensor 1180J, a touch sensor 1180K, an ambient light sensor 1180L, a bone conduction sensor 1180M, and the like.

The processor 1110 may include one or more processing units. For example, as shown in FIG. 11, in this example, the processor 1110 may include a first processor 1110A and a second processor 1110B. In some implementations, the first processor 1110A may be an application processor (application processor, AP). In some other implementations, the second processor 1110B may be a modem (Modem).

In some other embodiments, the processor 1110 may include a graphics processing unit (graphics processing unit, GPU), an image signal processor (image signal processor, ISP), a controller, a video codec, a digital signal processor (digital signal processor, DSP), a baseband processor (baseband processor, BP or BBP), and/or a neural-network processing unit (neural-network processing unit, NPU), and/or the like. Different processing units may be independent components, or may be integrated into one or more processors.

The processor may generate an operating control signal based on an instruction operation code and a sequence signal, to complete control of fetching and executing instructions.

A memory may be further disposed in the processor 1110, and is configured to store instructions and data. In some embodiments, the memory in the processor 1110 may be a cache. The memory may store instructions or data used or frequently used by the processor 1110. If the processor 1110 needs to use the instructions or data, the instructions or data may be directly invoked from the memory. Repeated access is avoided, and waiting time of the processor 1110 is reduced, so that system efficiency is improved.

In some embodiments, the processor 1110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 1110 may be connected to the touch sensor, the audio module, the wireless communication module, the display, the camera module, and the like by using at least one of the foregoing interfaces.

It may be understood that a schematic interface connection relationship between the modules in the embodiments of this application is merely an example for description, and constitutes no limitation on the structure of the electronic device. In some other embodiments of this application, the electronic device may alternatively use an interface connection manner different from that in the foregoing embodiments, or use combinations of a plurality of interface connection manners.

It should be noted that the structure shown in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by using hardware, software, or a combination of software and hardware.

In this embodiment of this application, one or more chip systems may be disposed in the UE. The one or more chip systems may be configured to support the UE to implement the communication method provided in any one of FIG. 5A to FIG. 8. The chip system may also be a chip module.

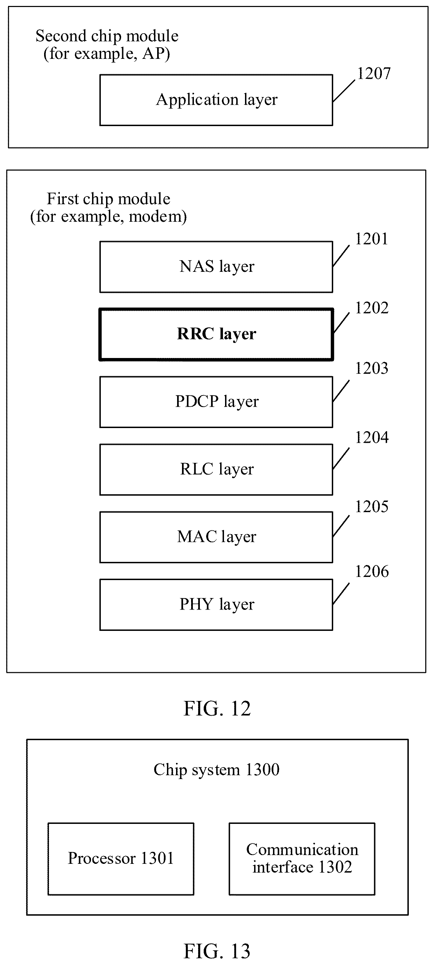

In an example, FIG. 12 is a schematic diagram of composition of an electronic device according to an embodiment of this application.

As shown in FIG. 12, the electronic device may include a first chip module and a second chip module. In some embodiments, the first chip module may correspond to the second processor shown in FIG. 11, and the second chip module may correspond to the first processor shown in FIG. 11.

In the example shown in FIG. 12, the first chip module may include an NAS layer 1201, an RRC layer 1202, a PDCP layer 1203, an RLC layer 1204, an MAC layer 1205, and a PHY layer 1206.

NAS is an abbreviation of a Non Access Stratum, and the NAS layer 1201 is a non-access layer. The NAS layer 1201 is mainly responsible for providing control and management for a non-access layer part. For example, EPS bearer management, authentication, and mobility management in an idle state (that is, an ECM-IDLE state) of an EPS connection management mode are responsible for functions such as generating a paging message of the UE in the ECM-IDLE state, and security control.

The RRC layer 1202 is a high layer of a control plane, is mainly responsible for controlling L1/L2 to complete air interface resource transmission, and provides an information transmission service for the NAS layer 1201. For example, the RRC layer 1202 may be configured to manage functions such as system message broadcast, RRC connection control, mobility management, and measurement configuration reporting. The RRC connection control management includes paging, establishing/modifying/suspending/recovering/releasing an RRC connection, initial security activation, establishing/modifying/activating an SRB/DRB, cell management in a DC and CA mode, radio link failure recovery, and the like.

Each determining and control logic provided in this embodiment of this application may be implemented by using the RRC layer 1202. For example, S602 to S604 shown in FIG. 6 may all be implemented by using the RRC layer 1202. In the solution implementation shown in FIG. 6, other steps may be jointly implemented by using another protocol layer and the RRC layer 1202.

PDCP is an abbreviation of a Packet Data Convergence Protocol, and the PDCP layer 1203 is a packet data convergence protocol layer. The PDCP layer 1203 is configured to process an RRC message on the control plane, and an internet protocol (Internet Protocol, IP for short) packet on a user plane. For example, on the user plane, after obtaining the IP data packets from an upper layer, the PDCP layer 1203 may compress and encrypt the IP data packets, and then transmit processed IP data packets to the RLC layer 1204. The PDCP layer 1203 further provides functions of in-sequence submission and repeated packet detection to the upper layer. On the control plane, the PDCP layer 1203 provides a signaling transmission service for upper-layer RRC, implements encryption and consistency protection of RRC signaling, and implements decryption and consistency check of the RRC signaling in an opposite direction.

RLC is an abbreviation of Radio Link Control, and the RLC layer 1204 is a radio link control layer. The RLC layer 1204 mainly provides a radio link control function, and provides services such as segmentation, retransmission control, and sending on demand for the upper layer. The RLC layer 1204 includes three transmission modes: a transparent mode (Transparent Mode, TM), an unacknowledged mode (Unacknowledged Mode, UM), and an acknowledged mode (Acknowledged Mode, AM), and mainly provides functions such as error correction, segmentation, and recombination.

MAC is an abbreviation of Media Access Control, and the MAC layer 1205 is a media access control layer. The MAC layer 1205 is configured to: provide mapping between a logical channel and a transmission channel; multiplex MAC SDUs from one or more logical channels onto one transport block and transfer the transport block to the PHY layer 1206; demultiplex the transport block transferred from the PHY layer 1206 into a plurality of MAC SDUs and transfer the plurality of MAC SDUs to one or more logical channels; report scheduling information; perform error correction through HARQ; manage priorities among users through dynamic scheduling; manage logical channel priorities, and the like.

The PHY layer 1206 is a physical layer (Physical Layer). The PHY layer 1206 provides mechanical, electronic, functional, and standard features for creating, maintaining, and splitting a physical link required for data transmission. The physical layer can be configured to ensure that original data may be transmitted on various physical media.

As shown in FIG. 12, in this embodiment of this application, the NAS layer 1201, the RRC layer 1202, the PDCP layer 1203, the RLC layer 1204, the MAC layer 1205, and the PHY layer 1206 may be integrated into the first chip module of the electronic device. For example, the first chip module may be a modem (modem) of the electronic device.

In addition, in some embodiments, an application layer 1207 may further be disposed in the electronic device. The application layer 1207 may be disposed on the upper layer of the NAS layer 1201. The application layer may be configured to process and determine signaling from the NAS layer, and deliver communication signaling and data to the NAS layer.

In the example shown in FIG. 12, the application layer 1207 may be disposed in the second chip module of the electronic device. For example, the second chip module may be an application processor unit (Application Processor Unit, APU or AP for short) of the electronic device.

In some other embodiments, the application layer 1207, the NAS layer 1201, the RRC layer 1202, the PDCP layer 1203, the RLC layer 1204, the MAC layer 1205, and the PHY layer 1206 may alternatively be in the same chip module. The division and configuration of various protocol layers in the electronic device are not specifically limited in the embodiments of this application.

In the foregoing example shown in FIG. 12, the chip system in the electronic device is described by using an example from a perspective of protocol division. In some other embodiments of this application, refer to FIG. 13. FIG. 13 is a schematic diagram of composition of a chip system 1300. The chip system 1300 may include a processor 1301 and a communication interface 1302, configured for the UE to achieve a function related to the foregoing embodiments. In a possible design, the chip system further includes a memory. The memory is configured to store program instructions and data necessary to an electronic device. The chip system may include a chip, or may include a chip and another discrete component. It should be noted that, in some implementations of this application, the communication interface 1302 may also be referred to as an interface circuit. In a possible implementation, the chip system 1300 may correspond to the first chip module and/or the second chip module shown in FIG. 12.

It should be noted that, all related content of the steps related to foregoing method embodiments may be quoted to the functional descriptions of the corresponding functional modules. Details are not described herein again.

All or some of the functions or motions or operations or steps in the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

Although this application is described with reference to specific features and the embodiments thereof, it is clear that, various modifications and combinations may be made to them without departing from the spirit and scope of this application. Correspondingly, the specification and the accompanying drawings are merely example descriptions of this application defined in the appended claims, and are considered as having covered any and all modifications, variations, combinations, or equivalents within the scope of this application. It is clear that, a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A communication method, applied to an electronic device, wherein the electronic device is in a call, and the method comprises:
receiving, by the electronic device, a first radio resource control RRC reconfiguration message, wherein the first RRC reconfiguration message comprises a first parameter and a first value corresponding to the first parameter; and the electronic device stores a first configuration item before receiving the first RRC reconfiguration message, the first configuration item comprises a second parameter and a second value corresponding to the second parameter, and the first parameter and the second parameter are related to a same attribute corresponding to a same object;
performing, by the electronic device, verification processing on the first RRC reconfiguration message and the first configuration item, wherein the verification processing comprises a first verification, and the first verification comprises verifying the first parameter, the first value corresponding to the first parameter, the second parameter, and the second value corresponding to the second parameter; and
sending, by the electronic device, a first RRC reconfiguration complete message when a verification failure result of the first verification is ignorable, or a process of the first verification is ignorable.

2. The method according to claim 1, wherein that the first parameter and the second parameter are related to a same attribute corresponding to a same object comprises that both the first parameter and the second parameter are related to an encrypted attribute corresponding to a first DRB.

3. The method according to claim 2, wherein that the electronic device stores a first configuration item comprises: receiving, by the electronic device, a second RRC reconfiguration message before receiving the first RRC reconfiguration message, wherein the second RRC reconfiguration message comprises the second parameter and the second value corresponding to the second parameter, the second parameter is an encrypted identifier corresponding to the first DRB, and the second value corresponding to the encrypted identifier of the first DRB represents that data transmitted through the first DRB does not need to be encrypted; and
the first parameter is an encryption algorithm, the first value corresponding to the first parameter is content corresponding to the encryption algorithm, and the content corresponding to the encryption algorithm represents that the data transmitted through the first DRB needs to be encrypted based on the content corresponding to the encryption algorithm; and the first RRC reconfiguration message does not comprise the encrypted identifier corresponding to the first DRB and the value corresponding to the encrypted identifier of the first DRB.

4. The method according to claim 3, wherein
that the second RRC reconfiguration message comprises the second parameter and the second value corresponding to the second parameter, the second parameter is an encrypted identifier corresponding to the first DRB, and the second value corresponding to the encrypted identifier of the first DRB represents that data transmitted through the first DRB does not need to be encrypted comprises that:
the second RRC reconfiguration message comprises a first cipheringDisabled field, and the first cipheringDisabled field corresponds to the first DRB; the first cipheringDisabled field indicates the encrypted identifier of the first DRB; and a value of the first cipheringDisabled field is set to true, representing that the data transmitted through the first DRB does not need to be encrypted; and
that the first RRC reconfiguration message comprises a first parameter and a first value corresponding to the first parameter, the first parameter is an encryption algorithm, the first value corresponding to the first parameter is content corresponding to the encryption algorithm, and the content corresponding to the encryption algorithm represents that the data transmitted through the first DRB needs to be encrypted based on the content corresponding to the encryption algorithm comprises that:
the first RRC reconfiguration message comprises an encryption configuration securityConfig field, wherein the securityConfig field indicates the encryption algorithm, and the securityConfig field represents that the first DRB needs to be encrypted based on the encryption algorithm.

5. The method according to claim 4, wherein the first verification fails when the first cipheringDisabled field is set to true, the first RRC reconfiguration message carries the securityConfig field and content corresponding to the securityConfig field, and the first RRC reconfiguration message does not comprise the first cipheringDisabled field and the value corresponding to the first cipheringDisabled field.

6. The method according to any one of claims 1 to 5, wherein
before the sending, by the electronic device, a first RRC reconfiguration complete message, the method further comprises:
determining, by the electronic device, that the verification failure result of the first verification is ignorable, or the process of the first verification is ignorable; and
the sending, by the electronic device, a first RRC reconfiguration complete message comprises:
ignoring, by the electronic device, the verification failure result of the first verification or skipping the first verification, and sending the first RRC reconfiguration complete message.

7. The method according to any one of claims 1 to 6, wherein the electronic device stores configuration information, the configuration information comprises first indication information, and the first indication information indicates whether the failure result or the process of the first verification is ignorable; and
the determining, by the electronic device, that the verification failure result of the first verification is ignorable, or the process of the first verification is ignorable comprises:
determining, by the electronic device based on the first indication information, that the verification failure result of the first verification is ignorable, or the process of the first verification is ignorable.

8. The method according to any one of claims 1 to 7, wherein the electronic device camps on a first cell when the electronic device receives the first RRC reconfiguration message, and the first cell corresponds to a first base station;
before the sending, by the electronic device, a first RRC reconfiguration complete message, the method further comprises:
continuing, by the electronic device, to camp on the first cell; and
the sending, by the electronic device, a first RRC reconfiguration complete message comprises:
sending, by the electronic device, the first RRC reconfiguration complete message to the first base station.

9. The method according to any one of claims 1 to 7, wherein the electronic device camps on a first cell when the electronic device receives the first RRC reconfiguration message, and the first cell corresponds to a first base station;
the first RRC reconfiguration message comprises cell information of a second cell, and the first RRC reconfiguration message is used for instructing the electronic device to be handed over to the second cell;
before the sending, by the electronic device, a first RRC reconfiguration complete message, the method further comprises:
camping, by the electronic device, on the second cell based on the cell information of the second cell, wherein the second cell corresponds to a second base station; and the second cell is different from the first cell; and
the sending, by the electronic device, a first RRC reconfiguration complete message comprises:
sending, by the electronic device, the first RRC reconfiguration complete message to the second base station.

10. The method according to any one of claims 2 to 4, wherein the second RRC reconfiguration message is received before the electronic device enters the call.

11. The method according to claim 7, wherein at least one ignoring configuration is preconfigured in the electronic device, and the first indication information corresponds to any one of the at least one ignoring configuration; and
before the sending, by the electronic device, a first RRC reconfiguration complete message, the method further comprises:
determining, by the electronic device based on the at least one ignoring configuration, that the verification failure result of the first verification is ignorable, or the process of the first verification is ignorable, wherein
the at least one ignoring configuration comprises a first ignoring identifier;
when the first ignoring identifier is set to a third value, it represents that the process of the first verification is ignorable; or
when the first ignoring identifier is set to a fourth value, it represents that the verification failure result of the first verification is ignorable.

12. The method according to claim 7, wherein the configuration information of the electronic device further comprises a skip switch, the skip switch is used for enabling the verification failure result of the first verification to be ignored, or the skip switch is used for enabling the process of the first verification to be ignored; and
before the sending, by the electronic device, a first RRC reconfiguration complete message, the method further comprises:
determining, by the electronic device, that the skip switch is turned on.

13. A communication apparatus, used in an electronic device, wherein the apparatus is configured to communicate with a base station according to the communication method according to any one of claims 1 to 12.

14. An electronic device, comprising a processor and a memory, wherein the memory stores one or more computer programs, and the one or more computer programs, when executed by the processor, cause the electronic device to communicate with a base station according to the communication method according to any one of claims 1 to 12.

15. The electronic device according to claim 14, wherein the processor comprises a modem modem.

16. A chip system, used in an electronic device, wherein the chip system comprises one or more interface circuits and one or more processors; the interface circuit and the processor are interconnected through a line; the interface circuit is configured to receive a signal from a memory of the electronic device, send the signal to the processor, and the signal comprises computer instructions stored in the memory; and when the processor executes the computer instructions, the electronic device performs the method according to any one of claims 1 to 12.

17. The chip system according to claim 16, wherein the chip system comprises a modem modem.
